# EUROPEAN PATENT APPLICATION

(11) **EP 0 993 190 A2**
(43) Date of publication of application: **12.04.2000**
(21) Application number: 99307908.6
(22) Date of filing: 07.10.1999
(51) Int. Cl.: H04N 5/926

(54) **Image data recording and reproducing method, apparatus and medium**

(30) Priority: 09.10.1998 JP 28855798; 09.10.1998 JP 28855698
(71) Applicant: SONY CORPORATION, Tokyo 141 (JP)
(72) Inventor: Ashizaki, Koji, Shinagawa-ku, Tokyo (JP); Kato, Naoya, Shinagawa-ku, Tokyo (JP)
(74) Representative: Horner, David Richard

(57) **Abstract**

There are provided an image data recording method and an image data recording apparatus adapted for recording high definition image data at low cost on an information recording medium having a sufficient memory capacity, an image data reproducing method and an image data reproducing apparatus adapted for reproducing image data recorded on an information recording medium as high definition image data by means of such an image data recording method and an image data recording apparatus, an information recording medium for recording high definition image data by means of such an image data recording method and an image data recording apparatus and a computer-readable recording medium to be used for causing a computer to operate with such an image data recording method and a computer-readable recording medium to be used for causing a computer to operate with such an image data reproducing method. An original image 1 is converted into a plurality of images to be recorded 2, 3, 4 in a first processing step and each of the plurality of images 2, 3, 4 is divided into a plurality of divided images 5, 6, 7 in a second processing step. Then, the divided images 5, 6, 7 are recorded on a recording medium on a frame by frame basis in a third step.

## Description

### BACKGROUND OF THE INVENTION

### Field of the Invention

This invention relates to an image data recording method and an image data recording apparatus adapted for recording high resolution image data on an information recording medium and also to an image data reproducing method and an image data reproducing apparatus adapted for reproducing image data recorded on an information recording medium as high resolution image data. The present invention further relates to an information recording medium for carrying image data recorded by means of such an image data recording method and also to a computer-readable recording medium to be used for causing a computer to operate with such an image data recording method and a computer-readable recording medium to be used for causing a computer to operate with the above image data reproducing method.

### Prior Art

In recent years, digital steel cameras adapted to record images as digital data have been attracting attention as a result of the ever-increasing popularity of computers. Efforts are being currently paid to produce high definition images to be recorded by means of such digital steel cameras. Recently, so-called mega-pixel cameras using more than a million pixels have been marketed.

Mega-pixel cameras are now replacing silver salt photography cameras particularly for recording construction scenes and car accident scenes because the high definition still images produced by mega-pixel cameras are comparable to those by silver salt photography cameras. However, mega-pixel cameras normally comprise a semiconductor memory with a memory capacity of about 16MB and hence can store just about 40 to 80 pictures at a time, which number is rather small from the viewpoint of the huge memory capacity of computers available these days.

On the other hand, digital video cameras adapted to record moving images as digital data normally comprise a magnetic tape as recording medium and hence can operate to record moving images for more than two hours.

Under these circumstances, there is a growing demand for digital video cameras having a large memory capacity and adapted to record still images. Currently effective non-military standards (e.g., the HD Digital CV Council DV Standards) for digital video cameras provide a still mode for taking still pictures in addition to a video mode for taking moving pictures.

### SUMMARY OF THE INVENTION

However, digital video cameras conforming to such standards are adapted to record still images with a number of pixels comparable to the image quality of the NTSC system. In other words, they are not adapted to record still images comparable to the high definition pictures taken by means of silver salt photography.

While the use of high definition digital video cameras designed to record high definition moving pictures may be conceivable to obtain high definition still images as part of the recorded high definition moving pictures, such an attempt will not be feasible particularly in tenns of the cost of the camera.

Therefore, it is an object of the present invention to provide an image data recording method and an image data recording apparatus adapted for recording high definition image data at low cost on an information recording medium having a sufficient memory capacity. Another object of the present invention is to provide an image data reproducing method and an image data reproducing apparatus adapted for reproducing image data recorded on an information recording medium as high definition image data by means of such an image data recording method and an image data recording apparatus. Still another object of the present invention is to provide an information recording medium for recording high definition image data by means of such an image data recording method and an image data recording apparatus. A further object of the present invention is to provide a computer-readable recording medium to be used for causing a computer to operate with such an image data recording method and a computer-readable recording medium to be used for causing a computer to operate with such an image data reproducing method.

According to the invention, high definition image data can be recorded at low cost by conforming to standards such as the D-1 Standards, the D-2 Standards or the DV Standards for digital video cameras adapted to record image data with a degree of resolution lower than that of high definition image data.

In accordance with the present invention, it has been found that high definition image data can be recorded to conform to standards for recording image data with a degree of resolution lower than that of high definition image data by dividing the high definition image data of a frame into image data of a number of frames with a lower resolution level and recording the divided image data on a frame by frame basis.

An image data recording method according to the invention is based on the above finding and comprises a first processing step of converting an original image into a plurality of images to be recorded with different degrees of resolution, a second processing step of dividing at least part of said plurality of images to be recorded by respective divisors, said divisors being different from each other, and producing a plurality of divided images with a same number of pixels for each of said part of the images to be recorded and a third processing step of continuously recording the image data of said plurality of images to be recorded on an information recording medium on a frame by frame basis, each frame corresponding to a divided image.

With the above described image data recording method according to the invention, an original image is divided into a plurality of images to be recorded with different degrees of resolution in the first processing step. Thus, a plurality of images to be recorded are produced out of an original image with different degrees of resolution.

With this image data recording method according to the invention, then at least part of the plurality of images to be recorded obtained as a result of the first processing step are divided by respective divisors that are different from each other and a plurality of divided images are produced from each of said part of the plurality of images to be recorded with a same number of pixels in the second processing step. Thus, for example, an image to be recorded having twice as many pixels as a predetermined number of pixels will be divided by two to produce two divided images, whereas an image to be recorded having four times as many pixels as the predetermined number of pixels will be divided by four to produce four divided images. Thus, a plurality of divided images will be produced with a same number of pixels for each of the images to be recorded.

With this image data recording method, the image data of the images to be recorded with different degrees of resolution are then continuously recorded on an information recording medium on a frame by frame basis, each frame corresponding to a divided image, in said third processing step.

Thus, with the above described image data recording method, each of a plurality of images to be recorded is divided into a plurality of divided images and the image data obtained for the images to be recorded are recorded on an information recording medium on a frame by frame basis, each frame corresponding to a divided image. The net result is that a high definition image can be appropriately recorded in a manner conforming to the standards provided for recording the image data of images with a low degree of resolution.

Then, the image data of a plurality of images to be recorded produced out of an original image with different degrees of resolution are recorded continuously on an information recording medium. Therefore, the original image can be reproduced with a desired degree of resolution by reading the image data of the image recorded with the desired degree of resolution on the information recording medium.

With the above described image data recording method, preferably said second processing step includes sub-steps of dividing each of said plurality of images to be recorded into a plurality of pixel blocks, each pixel block containing a plurality of adjacently located pixels, taking out more than one pixels from each of the pixel blocks and synthetically recombining the obtained pixels to produce said divided images.

With the above arrangement of producing divided images for each of the images to be recorded, if a divided image is displayed to the user directly, the displayed image will be close to the original image.

With the above described image data recording method, preferably said plurality of images to be recorded are recorded continuously on the basis of a number of frames per second that allows an original image to be recorded in several seconds in said third processing step.

With the above arrangement of recording continuously a plurality of images to be recorded on the basis of a number of frames per second, several seconds are allowed to the user to identify the position of recording the image data of the images to be recorded that are produced from a single original image to a great convenience of the user who handles the image data.

With the above described image data recording method, preferably, each of said at least part of said plurality of images to be recorded is divided by a divisor equal to 2²ⁿ (n being an integer equal to or greater than 1) in said second step.

With the above arrangement of dividing each of at least part of a plurality of images to be recorded by a divisor equal to 2²ⁿ (n being an integer equal to or greater than 1), the total data volume of the image data of the plurality of images to be recorded can be held within 4/3 of the data volume of the image(s) to be recorded with the highest degree of resolution selected out of the plurality of images to be recorded.

With the above described image data recording method, preferably each of the divided images of each of said at least part of said plurality of images to be recorded is recorded in multiple in a plurality of frames in said second processing step.

With the above arrangement, each of the divided images of each of at least part of a plurality of images to be recorded is recorded in multiple in a plurality of frames to improve the reliability of the recorded image data.

With the above described image data recording method, preferably information indicating that said image data of said plurality of images to be recorded are recorded on said information recording medium for each of said divided images is recorded with said image data of said plurality of images to be recorded in said third processing step.

With the above arrangement of recording information indicating that the image data of a plurality of images to be recorded are recorded on an information recording medium for each of the divided images with the image data of the plurality of images to be recorded, the recorded images can easily be identified as divided images.

Preferably, with the above described image data recording method, if a pixel arbitrarily selected on a pixel block is a first pixel and the frame for recording the divided image containing the first pixel is a first frame, said image data of said images to be recorded are recorded on said information recording medium in such a way that the divided image recorded in a frame adjacent to said first frame contains a pixel located adjacent to said first pixel in said third processing step.

With the above arrangement of recording the image data of the images to be recorded on an information recording medium, the images recorded on the information recording medium can be reproduced as moving images without significant oscillations and hence without giving a sense of significant bewilderedness to the viewer.

An image data recording apparatus according to the invention is based on the above finding and comprises an image processing section for converting an original image into a plurality of images to be recorded with different degrees of resolution, dividing at least part of said plurality of images to be recorded by respective divisors, said divisors being different from each other, and producing a plurality of divided images with a same number of pixels for each of said part of the images to be recorded and a recording section for continuously recording the image data of said plurality of images to be recorded on an information recording medium on a frame by frame basis, each frame corresponding to a divided image.

With an image data recording apparatus according to the invention and having a configuration as described above, an original image is divided into a plurality of images to be recorded with different degrees of resolution in the image processing section. Thus, a plurality of images to be recorded are produced out of an original image with different degrees of resolution. Then, at least part of the obtained plurality of images to be recorded are divided by respective divisors that are different from each other and a plurality of divided images are produced from each of said part of the plurality of images to be recorded with a same number of pixels. Thus, for example, an image to be recorded having twice as many pixels as a predetennined number of pixels will be divided by two to produce two divided images, whereas an image to be recorded having four times as many pixels as the predetermined number of pixels will be divided by four to produce four divided images. Thus, a plurality of divided images will be produced with a same number of pixels for each of the images to be recorded.

With the image data recording apparatus, the image data of the images to be recorded with different degrees of resolution are then continuously recorded on an information recording medium on a frame by frame basis, each frame corresponding to a divided image, in the recording section.

Thus, with the above described image data recording apparatus, each of a plurality of images to be recorded is divided into a plurality of divided images and the image data obtained for the images to be recorded are recorded on an information recording medium on a frame by frame basis, each frame corresponding to a divided image. The net result is that a high definition image can be appropriately recorded in a manner conforming to the standards provided for recording the image data of images with a low degree of resolution.

Then, the image data of a plurality of images to be recorded produced out of an original image with different degrees of resolution are recorded continuously on an information recording medium. Therefore, the original image can be reproduced with a desired degree of resolution by reading the image data of the image recorded with the desired degree of resolution on the information recording medium.

With the above described image data recording apparatus, preferably said image processing section divides each of said plurality of images to be recorded into a plurality of pixel blocks, each pixel block containing a plurality of adjacently located pixels, takes out more than one pixels from each of the pixel blocks and synthetically recombines the obtained pixels to produce said divided images.

With the above arrangement of the image processing section of producing divided images for each of the images to be recorded, if a divided image is displayed to the user directly, the displayed image will be close to the original image.

With the above described image data recording apparatus, preferably said recording section records continuously said plurality of images to be recorded on the basis of a number of frames per second that allows an original image to be recorded in several seconds.

With the above arrangement of the radius of curvature section of recording continuously a plurality of images to be recorded on the basis of a number of frames per second, several seconds are allowed to the user to identify the position of recording the image data of the images to be recorded that are produced from a single original image to a great convenience of the user who handles the image data.

With the above described image data recording apparatus, preferably, the image processing section divides each of said at least part of said plurality of images to be recorded by a divisor equal to 2²ⁿ (n being an integer equal to or greater than 1).

With the above arrangement of the image processing section of dividing each of at least part of a plurality of images to be recorded by a divisor equal to 2²ⁿ (n being an integer equal to or greater than 1), the total data volume of the image data of the plurality of images to be recorded can be held within 4/3 of the data volume of the image(s) to be recorded with the highest degree of resolution selected out of the plurality of images to be recorded.

With the above described image data recording apparatus, preferably the recording section records each of the divided images of each of said at least part of said plurality of images to be recorded in multiple in a plurality of frames.

With the above arrangement of the recording section of recording each of the divided images of each of at least pant of a plurality of images to be recorded in multiple in a plurality of frames, the reliability of the recorded image data will be improved.

With the above described image data recording apparatus, preferably the recording section records information indicating that said image data of said plurality of images to be recorded are recorded on said information recording medium for each of said divided images with said image data of said plurality of images to be recorded.

With the above arrangement of the recording section of recording information indicating that the image data of a plurality of images to be recorded are recorded on an information recording medium for each of the divided images with the image data of the plurality of images to be recorded, the recorded images can easily be identified as divided images.

Preferably, with the above described image data recording apparatus, if a pixel arbitrarily selected on a pixel block is a first pixel and the frame for recording the divided image containing the first pixel is a first frame, the recording section records said image data of said images to be recorded on said information recording medium in such a way that the divided image recorded in a frame adjacent to said first frame contains a pixel located adjacent to said first pixel.

With the above arrangement of the recording section of recording the image data of the images to be recorded on an information recording medium, the images recorded on the information recording medium can be reproduced as moving images without significant oscillations and hence without giving a sense of significant bewilderedness to the viewer.

An image data reproducing method according to the invention is based on the above finding and adapted to reproduce image data from an information recording medium carrying image data recorded thereon by converting an original image into a plurality of images to be reproduced with different degrees of resolution, dividing at least part of said plurality of images to be reproduced by respective divisors, said divisors being different from each other, producing a plurality of divided images with a same number of pixels for each of said part of the images to be reproduced and continuously recording the image data of said plurality of images to be reproduced on said information recording medium on a frame by frame basis, each frame corresponding to a divided image, said method comprising a first processing step of selectively reading a plurality of divided images of an image to be reproduced with a desired degree of resolution and a second processing step of synthetically recombining said plurality of divided images read out in said first processing step to output the image to be reproduced with said desired degree of resolution.

With the above described image data reproducing method according to the invention, a plurality of divided images of an image to be reproduced with a desired degree of resolution are read and output from the information recording medium carrying images to be reproduced with different degrees of resolution in the form of divided images recorded thereon in said first processing step.

Then, said read out plurality of divided images are synthetically recombined to output the image to be reproduced with said desired degree of resolution in said second processing step.

With the above described image data reproducing method, a plurality of divided images are synthetically recombined to output an image to be reproduced with a desired degree of resolution that is recorded in the form of a plurality of divided images on an information recording medium. The net result is that a high definition image can be reproduced from an information recording medium on which the image to be reproduced is recorded in a manner conforming to the standards provided for recording the image data of images with a low degree of resolution.

With the above described image data reproducing method, an image to be reproduced is synthetically recombined and output out of a plurality of images to be reproduced that are recorded on an information recording medium with different degrees of resolution so that the original image can be reproduced with a desired degree of resolution.

With the above described image data reproducing method, preferably said second processing step includes sub-steps of taking out one or more than one pixels from each of the plurality of divided images read out in the first processing step, forming a plurality of pixel blocks out of a plurality of pixels and synthetically recombining the plurality of pixel blocks to produce an image to be reproduced with a desired degree of resolution.

With the above described image data reproducing method, preferably the information indicating that said image to be reproduced is produced by synthetically recombining a plurality of pixel blocks with a desired degree of resolution is read from said information recording medium with said plurality of divided images in the first processing step.

With the above arrangement, the information indicating that said image to be reproduced is produced by synthetically recombining a plurality of pixel blocks with a desired degree of resolution is read out from said information recording medium with said plurality of divided images in the first processing step so that the fact that a high definition image is reproduced by synthetically recombining the plurality of divided images read out from the information recording medium can easily be identified.

An image data reproducing apparatus according to the invention is based on the above finding and adapted to reproduce image data from an information recording medium carrying image data recorded thereon by converting an original image into a plurality of images to be reproduced with different degrees of resolution, dividing at least part of said plurality of images to be reproduced by respective divisors, said divisors being different from each other, producng a plurality of divided images with a same number of pixels for each of said part of the images to be reproduced and continuously recording the image data of said plurality of images to be reproduced on said information recording medium on a frame by frame basis, each frame corresponding to a divided image, said apparatus comprising a reading section for selectively reading a plurality of divided images of an image to be reproduced with a desired degree of resolution and an image processing section for synthetically recombining said plurality of divided images read out by said reading section to output the image to be reproduced with said desired degree of resolution.

With an image data reproducing apparatus according to the invention and having a configuration as described above, a plurality of divided images of an image to be reproduced with a desired degree of resolution are read and output from the information recording medium carrying images to be reproduced with different degrees of resolution in the form of divided images recorded thereon by said reading section.

Then, said read out plurality of divided images are synthetically recombined to output the image to be reproduced with said desired degree of resolution by said image processing section.

With the above described image data reproducing apparatus, a plurality of divided images are synthetically recombined to output an image to be reproduced with a desired degree of resolution that is recorded in the form of a plurality of divided images on an information recording medium. The net result is that a high definition image can be reproduced from an information recording medium on which the image to be reproduced is recorded in a manner conforming to the standards provided for recording the image data of images with a low degree of resolution.

With the above described image data reproducing apparatus, an image to be reproduced is synthetically recombined and output out of a plurality of images to be reproduced that are recorded on an information recording medium with different degrees of resolution so that the original image can be reproduced with a desired degree of resolution.

With the above described image data reproducing apparatus, preferably said recording section takes out one or more than one pixels from each of the plurality of divided images read out by the reading section, forms a plurality of pixel blocks out of a plurality of pixels and synthetically recombines the plurality of pixel blocks to produce an image to be reproduced with a desired degree of resolution.

With the above described image data reproducing apparatus, preferably the reading section reads the information indicating that said image to be reproduced is produced by synthetically recombining a plurality of pixel blocks with a desired degree of resolution from said information recording medium with said plurality of divided images.

With the above arrangement, the information indicating that said image to be reproduced is produced by synthetically recombining a plurality of pixel blocks with a desired degree of resolution is preferably read from said information recording medium with said plurality of divided images by the reading section so that the fact that a high definition image is reproduced by synthetically recombining the plurality of divided images read out from the infonnation recording medium can easily be identified.

An information recording medium according to the invention is based on the above finding and adapted to carry thereon the image data of a plurality of images to be recorded as recorded on a frame by frame basis, each frame corresponding to a divided image, by converting an original image into the plurality of images to be recorded with different degrees of resolution, dividing at least part of said plurality of images to be recorded and producing a plurality of divided images with a same number of pixels for each of said part of the images to be recorded.

With an information recording medium according to the invention and having a configuration as described above, a plurality of images to be recorded with different degrees of resolution are actually recorded thereon in the form of divided images so that a high definition image can be reproduced by synthetically recombining a plurality of divided image.

With the above described information recording medium, a plurality of images to be recorded with different degrees of resolution are obtained by converting an original image and recorded on the information recording medium so that the original image can be reproduced with a desired degree of resolution by selecting an image to be recorded that has the desired degree of resolution out of the plurality of images to be recorded.

With the above described information recording medium, preferably said divided images recorded on the information recording medium are obtained by dividing each of said plurality of images to be recorded into a plurality of pixel blocks, each containing a plurality of adjacently arranged pixels, taking out one or more than one pixels from each of the pixel blocks and synthetically recombining the taken out pixels.

When an information recording medium according to the invention and having a configuration as described above carries divided images recorded thereon in a manner as described above, the divided images preferably appear like the image to be recorded if they are reproduced without being synthetically recombined.

A computer-readable recording medium according to the invention is based on the above finding and comprises a program recorded thereon and adapted to make a computer execute a first processing step of converting an original image into a plurality of images to be recorded with different degrees of resolution, a second processing step of dividing at least part of said plurality of images to be recorded by respective divisors, said divisors being different from each other, and producing a plurality of divided images with a same number of pixels for each of said part of the images to be recorded and a third processing step of continuously recording the image data of said plurality of images to be recorded on an information recording medium on a frame by frame basis, each frame corresponding to a divided image.

Thus, by making a computer execute said first, second and third processing steps, using the computer-readable recording medium, each of a plurality of images to be recorded is divided into a plurality of divided images and the image data obtained for the images to be recorded are recorded on an information recording medium on a frame by frame basis, each frame corresponding to a divided image. The net result is that a high definition image can be appropriately recorded in a manner confonning to the standards provided for recording the image data of images with a low degree of resolution.

Similarly, by making a computer execute said first, second and third processing steps, using the computer-readable recording medium, the image data of a plurality of images to be recorded produced out of an original image with different degrees of resolution are recorded continuously on an information recording medium. Therefore, the original image can be reproduced with a desired degree of resolution by reading the image data of the image recorded with the desired degree of resolution on the information recording medium.

A computer-readable recording medium according to another aspect of the invention is based on the above finding and carries a program recorded thereon and adapted to reproduce image data from an information recording medium carrying image data recorded thereon by converting an original image into a plurality of images to be reproduced with different degrees of resolution, dividing at least part of said plurality of images to be reproduced by respective divisors, said divisors being different from each other, producing a plurality of divided images with a same number of pixels for each of said part of the images to be reproduced and continuously recording the image data of said plurality of images to be reproduced on said information recording medium on a frame by frame basis, each frame corresponding to a divided image, said reproducing process comprising a first processing step of selectively reading a plurality of divided images of an image to be reproduced with a desired degree of resolution and a second processing step of synthetically recombining said plurality of divided images read out in said first processing step to output the image to be reproduced with said desired degree of resolution.

Thus, by making a computer execute said first and second steps, using the computer-readable recording medium, a plurality of divided images are synthetically recombined to output an image to be reproduced with a desired degree of resolution that is recorded in the form of a plurality of divided images on an information recording medium. The net result is that a high definition image can be reproduced from an information recording medium on which the image to be reproduced is recorded in a manner conforming to the standards provided for recording the image data of images with a low degree of resolution.

Similarly, by making a computer execute said first and second steps, using the computer-readable recording medium, an image to be reproduced is synthetically recombined and output out of a plurality of images to be reproduced that are recorded on an infonnation recording medium with different degrees of resolution so that the original image can be reproduced with a desired degree of resolution.

As discussed above, with an image data recording method according to the invention, since each of a plurality of images to be recorded is divided into a plurality of divided images and the image data obtained for the images to be recorded are recorded on an information recording medium on a frame by frame basis, each frame corresponding to a divided image, a high definition image can be appropriately recorded in a manner conforming to the standards provided for recording the image data of images with a low degree of resolution. Thus, with an image data recording method according to the invention, high definition images can be recorded at low cost, while securing a sufficient recording capacity.

Additionally, with an image data recording method according to the invention, since an original image is converted into a plurality of images to be recorded with different degrees of resolution and each of the plurality of images to be recorded is divided into a plurality of divided images before being recorded on an information recording medium, the original image can be reproduced with a desired degree of resolution by reading the image data of the image recorded with the desired degree of resolution on the information recording medium.

With an image data recording apparatus according to the invention, since each of a plurality of images to be recorded is divided into a plurality of divided images and the image data obtained for the images to be recorded are recorded on an information recording medium on a frame by frame basis, each frame corresponding to a divided image, a high definition image can be appropriately recorded in a manner confonning to the standards provided for recording the image data of images with a low degree of resolution. Thus, with an image data recording apparatus according to the invention, high definition images can be recorded at low cost, while securing a sufficient recording capacity.

Additionally, with an image data recording apparatus according to the invention, since an original image is converted into a plurality of images to be recorded with different degrees of resolution and each of the plurality of images to be recorded is divided into a plurality of divided images before being recorded on an information recording medium, the original image can be reproduced with a desired degree of resolution by reading the image data of the divided images of the image recorded with the desired degree of resolution on the information recording medium.

With an image data reproducing method according to the invention, since a plurality of divided images are synthetically recombined to output an image to be reproduced with a desired degree of resolution that is recorded in the form of a plurality of divided images on an information recording medium, a high definition image can be reproduced from an information recording medium on which the image to be reproduced is recorded in a manner conforming to the standards provided for recording the image data of images with a low degree of resolution.

Additionally, with an image data reproducing method according to the invention, since an image to be reproduced that are divided into a plurality of divided images with different degrees of resolution and recorded on an information recording medium is synthetically recombined and output out of the plurality of images to be reproduced so that the original image can be reproduced with a desired degree of resolution.

With an image data reproducing apparatus according to the invention, since a plurality of divided images are synthetically recombined to output an image to be reproduced with a desired degree of resolution that is recorded in the form of a plurality of divided images on an information recording medium, a high definition image can be reproduced from an infonnation recording medium on which the image to be reproduced is recorded in a manner conforming to the standards provided for recording the image data of images with a low degree of resolution.

Additionally, with an image data reproducing apparatus according to the invention, since an image to be reproduced that are divided into a plurality of divided images with different degrees of resolution and recorded on an information recording medium is synthetically recombined and output out of the plurality of images to be reproduced so that the original image can be reproduced with a desired degree of resolution.

With an information recording medium according to the invention, since a plurality of images to be recorded with different degrees of resolution are actually recorded thereon in the form of divided images, a high definition image can be reproduced by synthetically recombining a plurality of divided image. Additionally, since a plurality of images to be recorded with different degrees of resolution are obtained by converting an original image and recorded on the information recording medium, the original image can be reproduced with a desired degree of resolution by selecting an image to be recorded that has the desired degree of resolution out of the plurality of images to be recorded.

In the case of a computer-readable recording medium according to an aspect of the invention, by making a computer execute a processing operation of recording images to be recorded on an information recording medium, using the computer-readable recording medium, a plurality of divided images are synthetically recombined to output an image to be reproduced with a desired degree of resolution that is recorded in the form of a plurality of divided images on an information recording medium so that a high definition image can be reproduced from an information recording medium on which the image to be reproduced is recorded in a manner conforming to the standards provided for recording the image data of images with a low degree of resolution. Thus, by making a computer execute a processing operation of recording images to be recorded on an information recording medium, using the computer-readable recording medium, a high definition image can be reproduced at low cost with a desired degree of resolution.

Similarly, by making a computer execute a processing operation of recording images to be recorded on an information recording medium, using the computer-readable recording medium, a plurality of images to be recorded with different degrees of resolution are obtained by converting an original image and recorded on the information recording medium so that the original image can be reproduced with a desired degree of resolution by selecting an image to be recorded that has the desired degree of resolution out of the plurality of images to be recorded.

In the case of a computer-readable recording medium according to another aspect of the invention, by making a computer execute a processing operation of recording images to be recorded on an information recording medium, using the computer-readable recording medium, each of a plurality of images to be recorded is divided into a plurality of divided images and the image data obtained for the images to be recorded are recorded on an information recording medium on a frame by frame basis, each frame corresponding to a divided image so that a high definition image can be appropriately recorded in a manner conforming to the standards provided for recording the image data of images with a low degree of resolution.

Similarly, by making a computer execute a processing operation of recording images to be recorded on an information recording medium, using the computer-readable recording medium, the image data of a plurality of images to be recorded produced out of an original image with different degrees of resolution, each being divided into divided images, are recorded on an information recording medium, so that the original image can be reproduced with a desired degree of resolution by selectively reading the image data of the divided images of the image to be reproduced and synthetically recombining the reproduced image data.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:

FIG. 1 is a schematic illustration of the flow of the processing operation of an image data recording method according to an embodiment of the invention.

FIG. 2 is a schematic illustration of an image of a frame conforming to a known set of digital video standards.

FIG. 3 is a schematic illustration of a technique of dividing an image to be recorded.

FIG. 4 is a schematic illustration of another technique of dividing an image to be recorded.

FIG. 5 is a schematic illustration of still another technique of dividing an image to be recorded.

FIG. 6 is a schematic illustration of the underlying principle of a technique of recording divided images on a recording medium.

FIG. 7 is a schematic illustration of a technique of recording a divided image in multiple as a plurality of frames.

FIG. 8 is a schematic illustration of a specific technique of recording divided images on a recording medium.

FIG. 9 is an image that can be displayed on the display screen of a digital video set.

FIG. 10 is a schematic illustration of another specific technique of recording divided images on a recording medium.

FIG. 11 is a schematic illustration of still another specific technique of recording divided images on a recording medium.

FIG. 12 is a schematic illustration of still another specific technique of recording divided images on a recording medium.

FIG. 13 is a schematic illustration of the flow of the processing operation of an image data reproducing method according to an embodiment of the invention.

FIG. 14 is a schematic illustration of a technique of synthetically recombining image data for an image to be reproduced for the purpose of embodiments of the invention.

FIG. 15 is a schematic block diagram of image data recording apparatus according to an embodiment of the invention.

FIG. 16 is a schematic block diagram of image data recording apparatus according to another embodiment of the invention.

FIG. 17 is a schematic block diagram of image data reproducing apparatus according to an embodiment of the invention.

FIG. 18 is a schematic block diagram of an image data recording/reproducing apparatus to which an embodiment of the present invention is applied.

FIG. 19 is a schematic block diagram of another image data recording/reproducing apparatus to which an embodiment of the present invention is applied.

### DETAILED DESCRIPTION OF EMBODIMENTS OF THE INVENTION

Now, the present invention will be described by referring to the accompanying drawings that illustrate preferred embodiments of the invention. Note that the embodiment as described hereinafter are designed to confonn to the provisions ofRec. ITU-R BT. 601-5 and Rec. ITU-R BT. 656-3 of the NTSC system and will be described specifically in terms of digital video set with 525-line, 60 field/s. Therefore, in the following description, the number of pixels of a frame is equal to 720×486 and the aspect ratio of the entire screen is 4:3.

However, the present invention is by no means limited thereto and is, for example, applicable to digital video sets conforming to 625-line, 50 field/s and/or digital video sets conforming to the provisions of Rec. ITU-R BT. 1120 and adapted for use with the aspect ratio of the entire screen of 16:9.

In the following description, the original image to be recorded will be referred to as picked up image and the plurality of images obtained by transforming the picked up image to show a predetermined pixel number will be referred to as images to be recorded, whereas the images obtained by dividing an image to be recorded is referred to as divided image and the image obtained by synthetically recombining divided images will be referred to as image to be reproduced. The image obtained by transforming an image to be reproduced to show a predetermined pixel number will be referred to as image to be printed.

### 1. Image Data Recording Method

Firstly, an image data recording method according to an embodiment of the invention will be described.

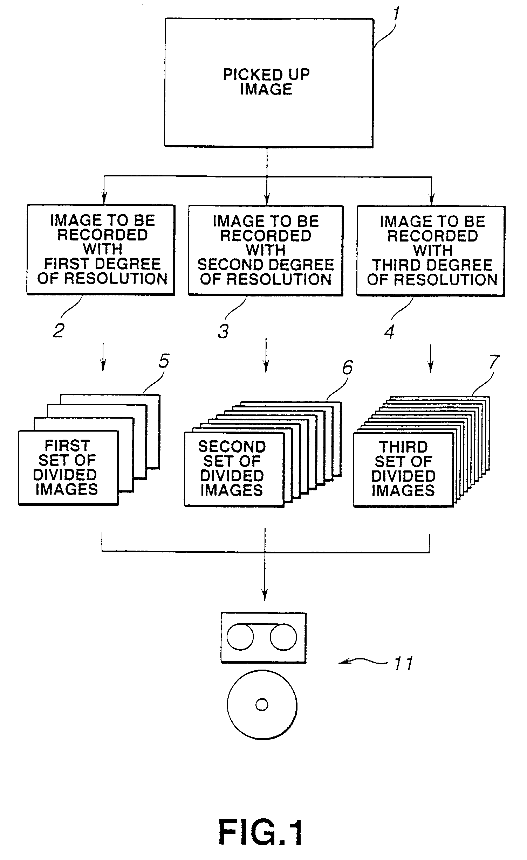

FIG. 1 is a schematic illustration of the flow of the processing operation of an image data recording method according to an embodiment of the invention. Referring to FIG. 1, an operation of image transformation is conducted on picked up image 1 taken typically by means of a solid-state electronic image pickup device such as CCD to produce a plurality of images to be recorded with different degrees of resolution. Each of the images to be recorded has a number of pixels as many as the number of pixels of an image of a frame of a digital video set to which the present invention is applied (to be referred to as unit image hereinafter) multiplied by an integer.

In the instance of FIG. 1, there are image to be recorded 2 with a first degree of resolution having a number of pixels four times as many as that of a unit image, image to be recorded 3 with a second degree of resolution having a number of pixels nine times as many as that of a unit image and image to be recorded 4 with a third degree of resolution having a number of pixels sixteen times as many as that of a unit image. However, it will be appreciated that the number of images to be recorded and that of pixels of each of the images to be recorded as used in applications of the present invention are by no means limited to the above example.

The image to be recorded 2 is obtained by transfonning the picked up image 1 to show the first degree of resolution and has a number of pixels four times as many as that of a unit image. For example, if the unit image has 486 pixels vertically and 720 pixels horizontally, the image to be recorded 2 has vertically arranged 972 pixels which is twice as many as the number of vertically arranged pixels of the unit image and horizontally arranged 1440 pixels which is also twice as many as the number of horizontally arranged pixels of the unit image.

The image to be recorded 3 is obtained by transforming the picked up image 1 to show the second degree of resolution and has a number of pixels nine times as many as that of a unit image. For example, if the unit image has 486 pixels vertically and 720 pixels horizontally, the image to be recorded 3 has vertically arranged 1458 pixels which is three times as many as the number of vertically arranged pixels of the unit image and horizontally arranged 2160 pixels which is also three times as many as the number of horizontally arranged pixels of the unit image.

The image to be recorded 4 is obtained by transforming the picked up image 1 to show the third degree of resolution and has a number of pixels sixteen times as many as that of a unit image. For example, if the unit image has 486 pixels vertically and 720 pixels horizontally, the image to be recorded 4 has vertically arranged 1944 pixels which is four times as many as the number of vertically arranged pixels of the unit image and horizontally arranged 2880 pixels which is also four times as many as the number of horizontally arranged pixels of the unit image.

While the ratio of the number of vertically arranged pixels to that of horizontally arranged pixels are mostly not equal to 1:1 in may of the existing sets of digital video standards (e.g., the D-1 Standards, the D-2 Standards, the DV Standards), the picked up image can have a ratio of the number of vertically arranged pixels to that of horizontally arranged pixels equal to 1:1 so that the ratio of the number of vertically arranged pixels to that of horizontally arranged pixels has to be carefully observed when transforming a picked up image into a plurality of images to be recorded with different degrees of resolution.

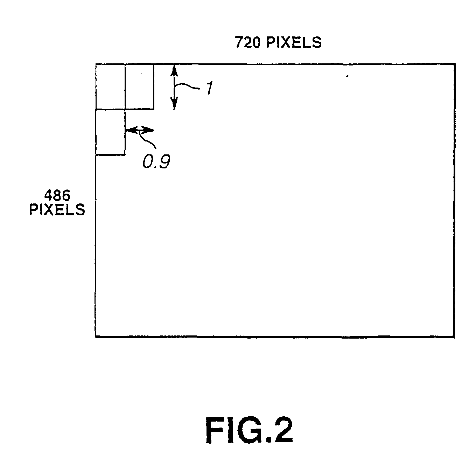

More specifically, a digital video set conforming to Rec. ITU-R BT. 601-5 and Rec, ITU-R BT. 656-3 has a ratio of the number of vertically arranged pixels to that of horizontally arranged pixels equal to 1:0.9 as shown in FIG. 2. Therefore, for example, when the ratio of the number of vertically arranged pixels to that of horizontally arranged pixels of a picked up image 1 is equal to 1:1, the picked up image 1 has to be transformed into a plurality of images to be recorded by taking the difference in the ratio of the number of vertically arranged pixels to that of horizontally arranged pixels into consideration.

Additionally, the picked up image 1 has to be transformed into a plurality of images to be recorde 1d in such a way that each of the images to be recorded shows an aspect ratio equal to that of the entire unit image.

More specifically, in a digital video set conforming to Rec. ITU-R BT. 601-5 and Rec, ITU-R BT. 656-3, an entire unit image shows an aspect ratio of 3:4. Therefore, the picked up image lhas to be transformed into a plurality of images to be recorded in such a way that each of the images to be recorded shows an aspect ratio of 3:4 as entire image.

In this way by making each of the plurality of images to be recorded show an aspect ratio equal to that of the entire unit image if viewed as a whole, the generation of distorted images can be minimized when the divided images are reproduced by a digital video set as moving picture.

Additionally, the generation of distorted images can be further reduced when the divided images are reproduced by a digital video set as moving picture if the aspect ratio of the entire picked up image 1 is equal to that of the entire unit image.

It will be appreciated that the reproduced image will show a high quality when the ratio of magnification of the number of pixels of each of the images to be recorded relative to that of the unit image is large. The ratio of magnification of the number of vertically arranged pixels of each of the images to be recorded relative to that of the unit image may be different from the ratio of magnification of the number of horizontally arranged pixels of the image to be recorded relative to that of the unit image.

When producing a plurality of images to be recorded with different numbers of pixels from a picked up image 1, a technique of resolution conversion has to be used for the images. Known techniques that can be used for resolution conversion include zero-time hold, linear interpolation, spline interpolation and the user of a digital filter, of which the technique of spatially carrying out an operation of linear or non-linear interpolation from the surrounding pixel values by means of the zero-time hold technique is a preferable choice.

However, all the plurality of images to be recorded do not require linear or non-linear interpolation. For example, when an image to be recorded 2 with the first degree of resolution is produced with the aid of linear or non-linear interpolation, an image to be recorded 4 with the third degree of resolution can be produced without the aid of linear or non-linear interpolation by utilizing the pixel data of the image to be recorded 2 with the first degree of resolution. More accurately, a group of four adjacently located pixels in an image to be recorded 4 with the third degree of resolution correspond to a pixel of an image to be recorded 2 with the first degree of resolution so that the image to be recorded 4 with the third degree of resolution can be produced without interpolation by utilizing the pixel data of the image to be recorded 2 with the first degree of resolution. In other words, an image to be recorded that requires a large volume of data for producing it can be prepared appropriately with a relatively small volume of arithmetic operations.

Then, each of the plurality of images to be recorded are divided into a number of divided images equal to their ratio of magnification of pixel number relative to the unit image. More specifically, the number ofpixels of an image to be recorded 2 with the first degree of resolution is four times greater than that of a unit image so that an image to be recorded 2 with the first degree of resolution is divided into four divided images (to be referred to as first divided images 5 hereinafter). Similarly, the number of pixels of an image to be recorded 3 with the second degree of resolution is nine times greater than that of a unit image so that an image to be recorded 3 with the second degree of resolution is divided into nine divided images (to be referred to as second divided images 6 hereinafter. Likewise, the number of pixels of an image to be recorded 4 with the third degree of resolution is sixteen times greater than that of a unit image so that an image to be recorded 4 with the third degree of resolution is divided into sixteen divided images (to be referred to as third divided images 7 hereinafter.

Thus, divided images are produced by dividing each of the plurality of images to be recorded by a number equal to the ratio of magnification of pixel number of the image to be recorded relative to the unit image. In other words, all the divided images have a number of pixels same as a unit image.

If an image to be recorded produced by transforming a picked up image 1 has a number of pixels same as a unit image, the image to be recorded having a number of pixels same as a unit image will be used as a divided image without a dividing process.

Now, a method of producing divided images will be discussed below in detail.

When dividing an image to be recorded in order to produce divided images, the image to be recorded is firstly divided into a plurality of pixel blocks, each of which contains a plurality of adjacently located pixels.

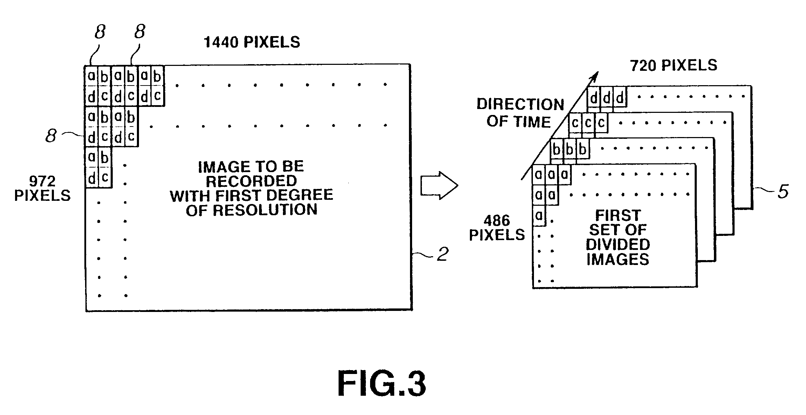

More specifically, when dividing an image to be recorded 2 with the first degree of resolution whose number of pixels is four times greater than a unit image into four first divided image 5, it will be firstly divided into 486 × 720 pixel blocks 8, each containing a total of four pixels arranged two by two vertically and horizontally as shown in FIG. 3.

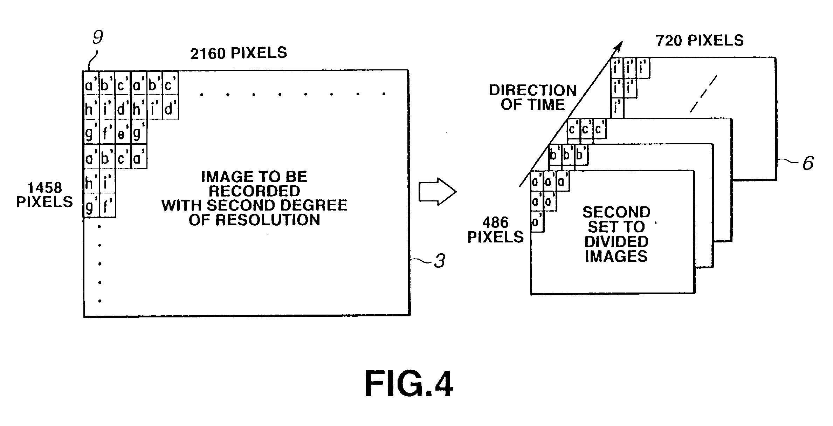

Similarly, when dividing an image to be recorded 3 with the second degree of resolution whose number of pixels is nine tunes greater than a unit image into nine secondt divided image 6, it will be firstly divided into 486 × 720 pixel blocks 8, each containing a total of sixteen pixels arranged four by four vertically and horizontally as shown in FIG. 4.

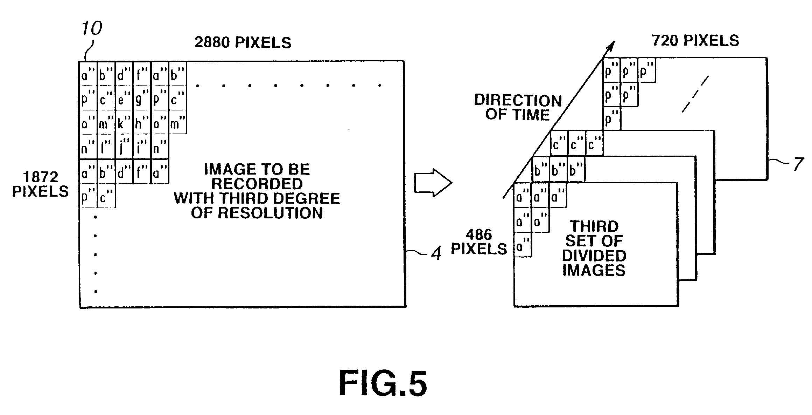

Likewise, when dividing an image to be recorded 4 with the third degree of resolution whose number of pixels is sixteen times greater than a unit image into sixteen first divided image 7, it will be firstly divided into 480 × 720 pixel blocks 8, each containing a total of sixteen pixels arranged four by four vertically and horizontally as shown in FIG. 5.

Then, a pixel is taken out from each of the 486 × 720 pixel blocks obtained by dividing the related image to be recorded and the taken out pixels are synthetically recombined to produce divided images.

For instance, when producing first divided images 5 from an image to be recorded 2 with the first degree of resolution, a pixel is taken out from each of the 486 × 720 pixel blocks, each containing four pixels, and the taken out pixels are synthetically recombined to produce four first divided images 5. Any two adjacently located pixels in any of the first divided images 5 are separated by two pixels vertically or horizontally in the image to be recorded 2 with the first degree of resolution.

Similarly, when producing second divided images 6 from an image to be recorded 3 with the second degree of resolution, a pixel is taken out from each of the 486 × 720 pixel blocks, each containing nine pixels, and the taken out pixels are synthetically recombined to produce nine second divided images 6. Any two adjacently located pixels in any of the second divided images 6 are separated by three pixels vertically or horizontally in the image to be recorded 3 with the second degree of resolution.

Likewise, when producing first divided images 7 from an image to be recorded 4 with the third degree of resolution, a pixel is taken out from each of the 486 × 720 pixel blocks, each containing sixteen pixels, and the taken out pixels are synthetically recombined to produce sixteen third divided images 7. Any two adjacently located pixels in any of the third divided images 7 are separated by four pixels vertically or horizontally in the image to be recorded 4 with the third degree of resolution.

While only a pixel is taken out from each of the plurality of pixel blocks obtained by dividing an image to be recorded and divided images are produced by synthetically recombining the taken out pixels in the above description, the present invention is not limited thereto and it may alternatively be so arranged for the purpose of the invention that a plurality of pixels are alternatively taken out from each of the plurality of pixel blocks obtained by dividing an image to be recorded and divided images are produced by synthetically recombining the taken out pixels. In such a case, the number of pixels contained in each pixel block will be greater than the number of the divided images produced by synthetically recombining the taken out pixels.

The image data of each of the divided images produced by dividing a plurality of images to be recorded with different degrees of resolution are then sequentially recorded on a recording medium 11 that may typically be a digital video tape or a digital video disk along the direction of time in such as way that a frame of a digital video set is allocated to a divided image.

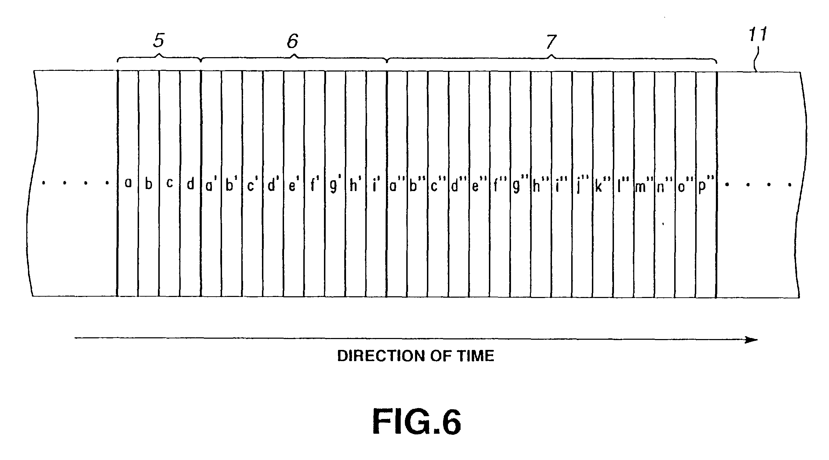

More specifically, the image data of four first divided images 5, the image data of nine second divided images 6, the image data of sixteen third divided images 7 are sequentially recorded on the recording medium 1 along the direction of time in such a way that a frame is allocated to the image data of a divided image as shown in FIG. 6.

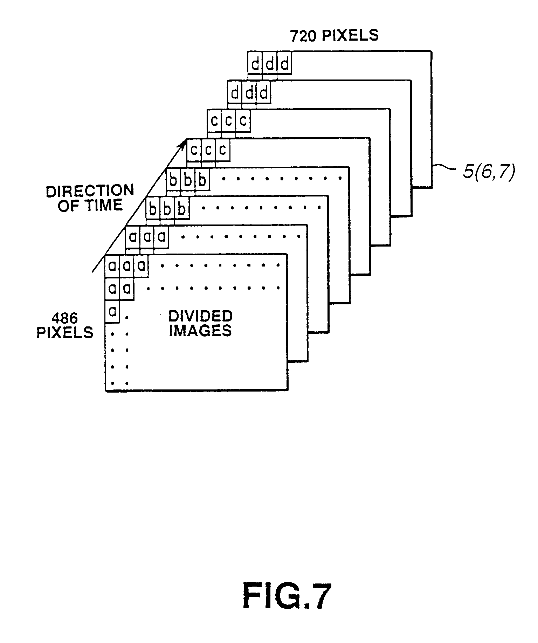

While a frame is allocated to the image data of one of the divided images formed by dividing the images to be recorded with different degrees of resolution in the above description, a plurality of frames may alternatively be allocated to the image data of one of the divided images formed by dividing the images to be recorded with different degrees of resolution as shown in FIG. 7. It will be appreciated that the reliability of the recorded data can be unproved by allocating a plurality of frames to the image of one of the divided images in multiple.

When recording divided images sequentially along the direction of time, the divided images are preferably recorded in the order of the vertically, horizontally or obliquely arranged pixels of the images to be recorded from which the divided images are produced. By recording the divided images sequentially along the direction of time in the order of arrangement of pixels of the images to be recorded, images can be displayed in good shape when they are reproduced as moving images by a digital video set. A plurality of divided images sequentially recorded along the direction of time are prepared by taking out different pixels of the corresponding image to be recorded and synthetically recombining them. Therefore, when the plurality of divided images recorded sequentially along the direction of time are reproduced as moving images by a digital video set, they appear as if they are oscillating. However, this apparent oscillation can be suppressed to an unremarkable level and the displayed images can be made to move smoothly by recording the divided images sequentially along the direction of time in the order of arrangement of pixels of the images to be recorded.

Additionally, when recording divided images sequentially along the direction of time, the divided images are more preferably recorded in such a way that the pixel contained in the divided image recorded first and the pixel contained in the divided image recorded last are located adjacently relative to each other vertically, horizontally or obliquely. Then, the movement of the divided images will appear to be even more smooth when they are reproduced.

As discussed above, with an image data recording method according to embodiments of the invention, since a picked up image 1 is transformed into a plurality of images to be recorded with different degrees of resolution, each of the plurality of images to be recorded is divided into a plurality of divided images and the image data obtained for the images to be recorded are recorded on an information recording medium 11 on a frame by frame basis, each frame corresponding to a divided image, a high definition image can be appropriately recorded by means of a digital video set conforming to the existing standards.

Additionally, with an image data recording method according to embodiments of the invention, since each of a plurality of images to be recorded is divided into a plurality of pixel blocks, each containing adjacently arranged pixels, one or more than one pixels are taken out from each of the pixel blocks and the taken out pixels are synthetically recombined to produce a plurality of divided images, any of the divided images can be displayed as moving pictures that are not particularly differentiated from the corresponding images to be recorded.

Still additionally, with an image data recording method according to embodiments of the invention, since each of a plurality of images to be recorded with different degrees of resolution is divided into a plurality of divided images before being recorded on an information recording medium 11, the original image can be reproduced with a desired degree of resolution by reading the image data of the divided images of the image recorded with the desired degree of resolution on the information recording medium.

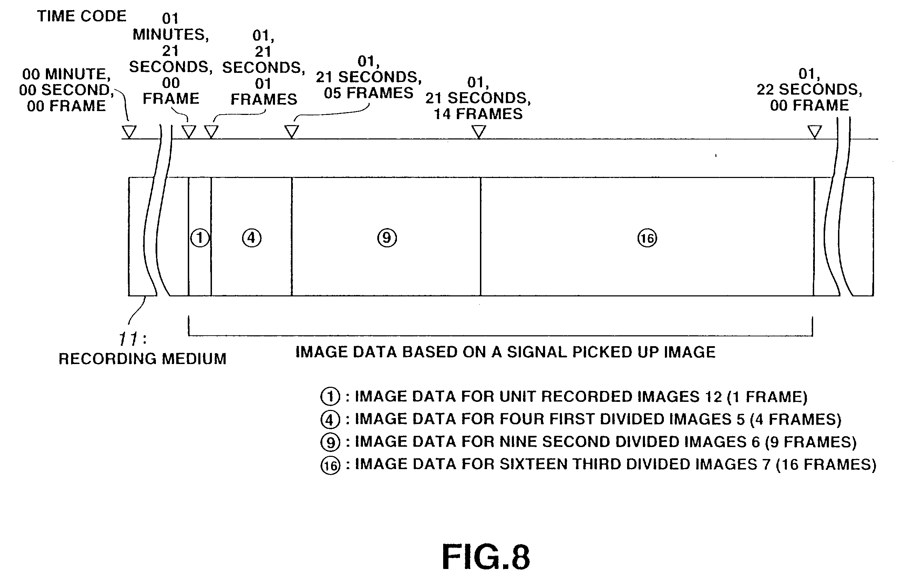

Meanwhile, with an image data recording method according to embodiments of the invention, preferably the image data of each of the plurality of divided images produced from each of the plurality of images to be recorded with different degrees of resolution that are prepared from a picked up image are recorded continuously over the frames of a second so that the image data of a picked up image may be recorded on a recording medium 11 in several seconds. FIG. 8 schematically illustrates a technique of recording the image data of each of the plurality of divided images produced from each of the plurality of image to be recorded with different degrees of resolution that are prepared from a picked up image over the frames of a second.

In the instance of FIG. 8, the image data of each of the plurality of divided images produced from each of a plurality of images to be recorded with different degrees of resolution are recorded on a recording medium 11 conforming to the digital video standards defining the number of frames per second to be equal to 30. The image data of the four first divided images 5 obtained by dividing an image to be recorded 2 with the first degree of resolution, the image data of the nine second divided images 6 obtained by dividing an image to be recorded 3 with the second degree of resolution and the image data of the sixteen third divided images 7 obtained by dividing an image to be recorded 4 with the third degree of resolution are recorded sequentially on the recording medium 11 along the direction of time. In this instance, the image data obtained as a result of transformation for making each of the images to be recorded to have a number of pixels same as that of a unit image in the process of transforming the picked up image 1 (hereinafter referred to as unit recorded images 12) and recorded on the recording medium 11 as image data for a divided image.

As a result of sequentially recording the image data of the four first divided images 5 obtained by dividing an image to be recorded 2 with the first degree of resolution, the image data of the nine second divided images 6 obtained by dividing an image to be recorded 3 with the second degree of resolution and the image data of the sixteen third divided images 7 obtained by dividing an image to be recorded 4 with the third degree of resolution on the recording medium 11 along the direction of time in a manner as described above, the image data of the divided images 5, 6, 7 produced from a single picked up image and the unit recorded images 12 (hereinafter collectively referred to as image data produced from a picked up image) are recorded over 30 frames of the recording medium 11, which is the number of frames per second.

Preferably, the image data obtained from a single picked up image are recorded from the 0-th frame of a second of the time codes on the recording medium 11.

As a result of sequentially recording the image obtained from a single picked up image over the frames per second from the 0-th frame of a second of the time codes on the recording medium 11 in a manner as described above, the user can easily locate the desired image on the bases of the time codes recorded on the recording medium 11.

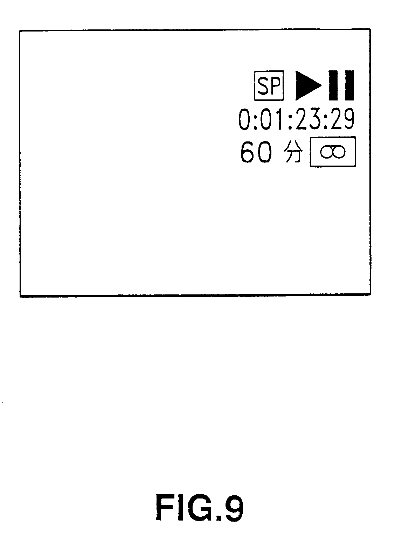

In the case of a digital video set conforming to the DV Standards, the time codes can be displayed on the screen with the recorded video images as shown in FIG. 9. Therefore, the user can easily recognize the correspondence of the image and the time code being displayed on the screen of the digital video set. Similarly, a digital video set conforming to the D1 or D2 Standards or some other existing set of standards is provided with a feature of displaying the time codes so that the user may easily recognize the correspondence of the image and the time code being displayed on the screen.

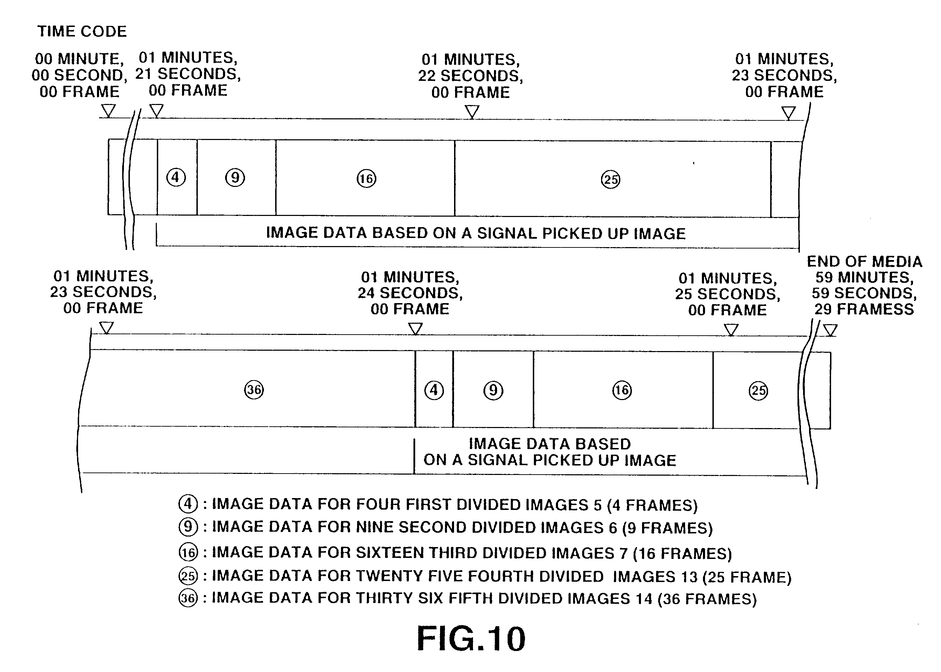

The technique of continuously recording the image data obtained from a single picked up image over the frames of a unit time is not limited to the example illustrated in FIG. 8. FIGS. 10, 11 and 12 illustrate other examples of technique of continuously recording the image data obtained from a single picked up image over the frames of a unit time.

In the example of FIG. 10, the image data of the first divided images 5 obtained by dividing an image to be recorded 2 with the first degree of resolution, the image data of the second divided images 6 obtained by dividing an image to be recorded 3 with the second degree of resolution, the image data of the third divided images 7 obtained by dividing an image to be recorded 4 with the third degree of resolution, the image data of the fourth divided images 13 obtained by dividing an image to be recorded with a fourth degree of resolution and having a number of pixels 25 times as many as a unit image and the image data of the fifth divided images 14 obtained by dividing an image to be recorded with a fifth degree of resolution and having a number of pixels 36 times as may as a unit image are continuously recorded on the recording medium 11 over 90 frames, which is the number frames of 3 seconds.

More specifically, the four first divided images 5 are recorded over four frames and the nine second divided images 6 are recorded over nine frames, while the sixteen third divided images 7 are recorded over sixteen frames and the twenty five fourth divided images 13 and the thirty six fifth divided images 14 are recorded respectively over twenty five frames and thirty six frames to make the total number of frames equal to 90 for a single picked up image.

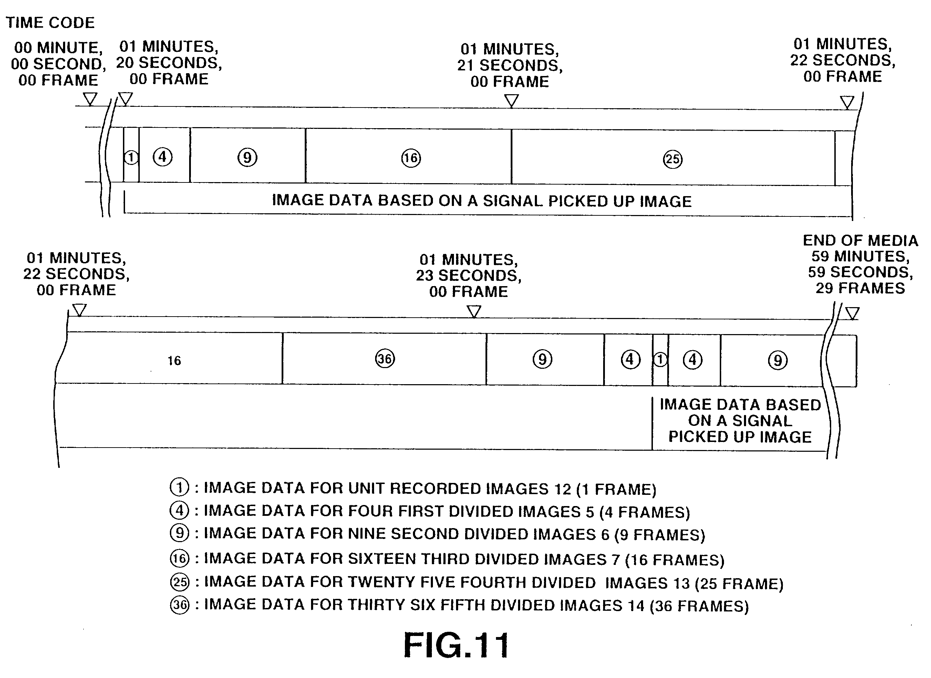

In the example shown in FIG. 11, the image data of the first divided images 5 obtained by dividing an image to be recorded 2 with the first degree of resolution, the image data of the second divided images 6 obtained by dividing an image to be recorded 3 with the second degree of resolution, the image data of the third divided images 7 obtained by dividing an image to be recorded 4 with the third degree of resolution, the image data of the fourth divided images 13 obtained by dividing an image to be recorded with a fourth degree of resolution and having a number of pixels 25 times as many as a unit image, the image data of the fifth divided images 14 obtained by dividing an image to be recorded with a fifth degree of resolution and having a number of pixels 36 times as may as a unit image and a unit recorded image 12 are continuously recorded on the recording medium 11 over 120 frames, which is the number frames of 4 seconds.

In this example, each of the first divided images 5, the second divided images 6 and the third divided images 7 is recorded in two frames in a duplicated manner. In other words, the unit recorded images 12 is recorded in a frame and the four first divided images 5 and the nine second divided images 6 are recorded respectively over eight frames and over eighteen frames, while the sixteen fourth divided images 7 and the thirty six fifth divided images 8 are recorded respectively over twenty five frames and over thirty six frames to make the total number of frames equal to 120.

By recording the image data of part or all of the divided images in multiple in this way, any divided image can be reproduced reliably even if some of the image data of the divided image are destroyed to improve the overall reliability of the recorded image data.

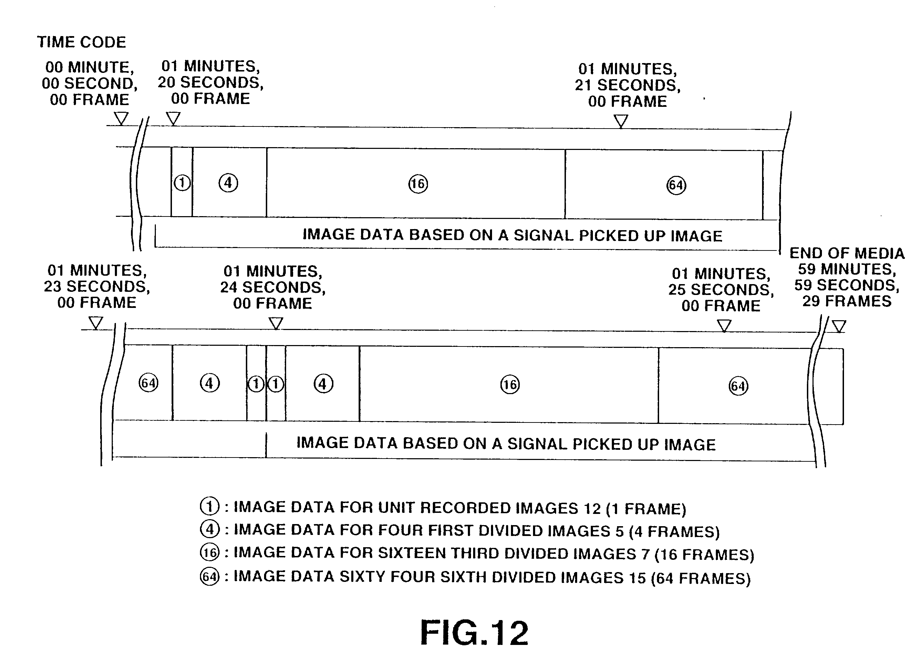

In the example shown in FIG. 12, the image data of the first divided images 5 obtained by dividing an image to be recorded 2 with the first degree of resolution, the image data of the third divided images 7 obtained by dividing an image to be recorded 4 with the third degree of resolution, the image data of the sixth divided images 15 obtained by dividing an image to be recorded with a sixth degree of resolution and having a number of pixels 64 times as many as a unit image and a unit recorded image 12 are continuously recorded on the recording medium 11 over 90 frames, which is the number frames of 3 seconds.

In this example, each of the first divided images 5 and the unit recorded image 12 is recorded in two frames in a duplicated manner. In other words, the unit recorded images 12 is recorded in two frames and the four first divided images 5 recorded over eight frames, while the sixteen third divided images 7 and the sixty four sixth divided images 15 are recorded respectively over sixteen frames and over sixty four frames to make the total number of frames equal to 90.

Additionally, in this example, each side of each image to be recorded is divided by 2ⁿ (n being an integer equal to or greater than 1) and hence each of the images to be recorded is divided by 2²ⁿ to produce so many divided images, which are then recorded on the recording medium 11. More specifically, each side of an image to be recorded 2 with the first degree of resolution is divided by 2 and hence the image is divided by four to produce first divided images 5 and each side of an image to be recorded 4 with the third degree of resolution is divided by four and hence the image is divided by sixteen to produce third divided images 7, while each side of an image to be recorded with the sixth degree of resolution is divided by eight and hence the image is divided by sixty four to produce sixth divided images and all the divided images are recorded on the recording medium 11.

With the above arrangement of dividing each image to be recorded by a divisor equal to 2²ⁿ, or 4ⁿ, and recording the obtained divided images on a recording medium 11, if the maximum volume of image data to be recorded is V, the total data volume of the image data of the images to be recorded can be held within (V-V/4+V/4²-V/4³+···)/V=1+1/4+1/4²+1/4³+··· or 4/3 of V.

### 2. Image Data Reproducing Method

Now, an image data reproducing method according to an embodiment of the invention will be discussed below.

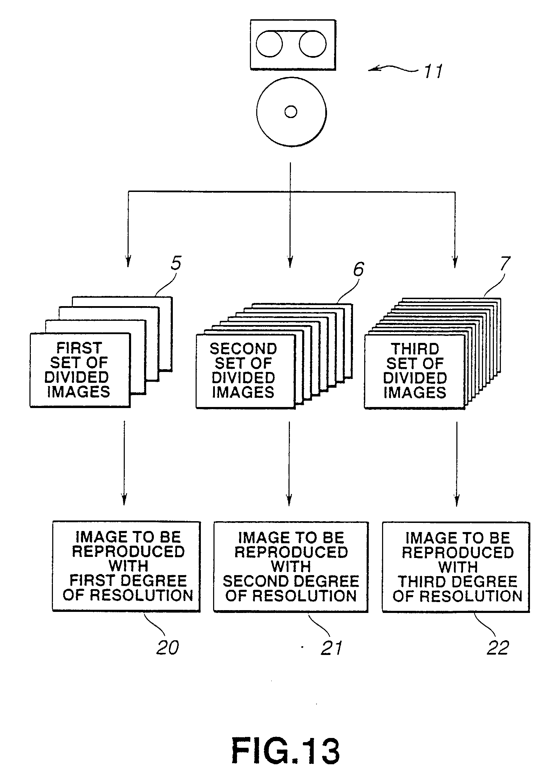

FIG. 13 is a schematic illustration of the flow of the processing operation of an image data reproducing method according to an embodiment of the invention. Referring to FIG. 13, image data are reproduced from recording medium 11 where the image data of the four first divided images 5 obtained by dividing an image to be recorded 2 with the first degree of resolution, the image data of the nine second divided images 6 obtained by dividing an image to be recorded 3 with the second degree of resolution and the image data of the sixteen third divided images 7 obtained by dividing an image to be recorded 4 with the third degree of resolution recorded.

Referring to FIG. 13, with an image data reproducing method according to an embodiment of the invention, firstly the first divided images 5, the second divided images 6 or the third divided images 7 are read out from the recording medium 11, which may be a digital video tape or a digital video disk.

If a divided image is recorded over a plurality of frames in multiple, one of the multiple may be read from the corresponding one of the plurality of frames. However, preferably, all or part of the image data of the divided image recorded in multiple are read from all or part of the frames and averaged on a pixel by pixel basis. Techniques that can be used for the averaging operation include that of calculating the weighted mean value, that of calculating the median and that of selecting the most frequently appearing value. By means of such an averaging operation for reading a single divided image, any loss of image data that may occur in the recording medium 11 in storage or during the image data reproducing operation can be compensated.

Then, an image to be reproduced is obtained by synthetically recombining the plurality of divided images read out from the recording medium 11. More specifically, when the first divided images 5 are read out from the recording medium 11, an image to be reproduced 20 showing the degree of resolution same as that of the image to be recorded 2 with the first degree of resolution is obtained by synthetically recombining the image data of the read out first divided images 5. Similarly, when the second divided images 6 are read out from the recording medium 11, an image to be reproduced 21 showing the degree of resolution same as that of the image to be recorded 3 with the second degree of resolution is obtained by synthetically recombining the image data of the read out second divided images. Likewise, when the third divided images 7 are read out from the recording medium 11, an image to be reproduced 22 showing the degree of resolution same as that of the image to be recorded 4 with the third degree of resolution is obtained by synthetically recombining the image data of the read out third divided images.

The operation of synthetically recombining an image to be reproduced is a reverse of that of dividing an image to be recorded by means of the above described image data recording method.

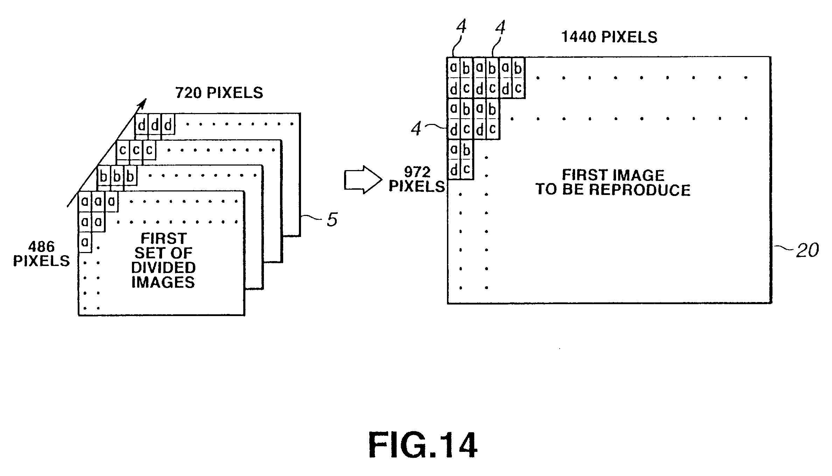

FIG. 14 is a schematic illustration of a technique of synthetically recombining image data for an image to be reproduced for the purpose of embodiments of the invention. Referring to FIG. 14, when obtaining an image to be reproduced 20 from a plurality of first divided images 5, firstly one or more than one pixel are taken out from each of the first divided images 5 and a pixel block 8 is formed from the plurality of taken out pixels as in the above described case of dividing an image to be recorded 2 with the first degree of resolution into first divided images 5. Then, the plurality of pixel blocks produced in this way are combined in the sequence same as the one used for the recording operation to synthetically obtain a first image to be reproduced 20.

Thus, with an image data reproducing method according to embodiments of the invention, since a plurality of divided images are synthetically recombined to output an image to be reproduced with a desired degree of resolution that is recorded in the form of a plurality of divided images on an information recording medium, a high definition image can be reproduced from an information recording medium on which the image to be reproduced is recorded in a manner conforming to any existing set of standards provided for digital video recording.

Additionally, with an image data reproducing method according to embodiments of the invention, since an image to be reproduced that are divided into a plurality of divided images with different degrees of resolution and recorded on an information recording medium is synthetically recombined and output out of the plurality of images to be reproduced so that the original image can be reproduced with a desired degree of resolution.

With an image data reproducing method according to embodiments of the invention, an image with a high degree of resolution same as that of the picked up image (hereinafter referred to as printed image 23) can be obtained by preparing an image to be reproduced and subsequently conducting an operation of image transformation on the image to be reproduced.

### 3. Image Data Recording Apparatus

Now, an image data recording apparatus according to an embodiment of the invention will be described in terms of an embodiment adapted to transform a picked up image 1 into first divided images 5, second divided images 6 and third divided images 7 and recording the image data of these divided images on a recording medium 11.

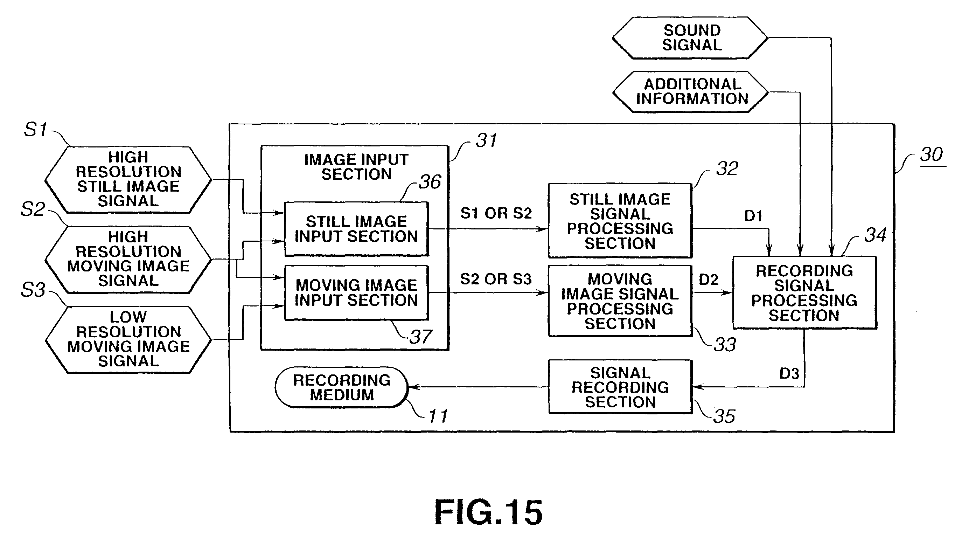

FIG. 15 is a schematic block diagram of the above embodiment of image data recording apparatus according to the invention. The image data recording apparatus 30 is adapted to receive a high resolution still image signal S1, a high resolution moving image signal S2 or a low resolution moving image signal S3 as input and record the input high resolution still image signal S1, the high resolution moving image signal S2 or the low resolution moving image signal S3 in the form of image data D1 of a still image formed by a plurality of divided images. Additionally, it is adapted to record the input high resolution moving signal S2 or the low resolution moving signal S3 on the recording medium 11 as image data D2 of a low resolution moving image. In the following description, high resolution refers to a degree of resolution higher than the degree of resolution of an image recorded according to the digital video standards to which the image data recording apparatus 30 conforms. whereas low resolution refers to the degree of resolution lower of an image recorded according to the digital video standards to which the image data recording apparatus 30 conforms.

The image data recording apparatus 30 comprises an image input section 31, a still image signal processing section 32 for transforming the high resolution still image signal S1 or the high resolution moving image signal S2 transmitted from the image input section 31 into image data D1 of a still image formed from a plurality of divided images, a moving signal processing section 33 for transforming the high resolution moving image signal S2 or the low resolution moving image signal S3 transmitted from the image input section 31 into image data D2 of a low resolution moving image, a recording signal processing section 34 for carrying out a predetermined signal processing operation on the image data D1 of the still image fed from the still image signal processing section 32 or the image data D2 of the low resolution moving image fed from the moving image signal processing section 33 and producing image data D3 in a format conforming to the DV Standards and a signal recording section 35 for recording the image data D3 fed from the recording signal processing section 34 on a recording medium 11.

The image input section 31 includes a still image input section 36 and a moving image input section 37. The image input section 31 has a functional feature of selecting a necessary signal from a plurality of input signals.

The still image input section 36 receives a high resolution still image signal S1 or a high resolution moving image signal S2 as input and supplies the still image signal processing section 32 with an necessary image. In other words, it supplies the still image signal processing section 32 with the input image as picked up image 1. On the other hand, the moving image input section 37 receives a high resolution moving image signal S2 or a low resolution moving image signal S3 as input and supplies the moving image processing section 33 with a necessary image.

The still image signal processing section 32 transfonns the picked up image 1 into first divided images 5 by way of first images 2 to be recorded, into second divided images 6 by way of second images 3 to be recorded and into third divided images 7 by way of third images 4. In other words, the still image signal processing section 32 carries out a transforming operation on the picked up image 1 fed from the still image input section 36 (high resolution still image signal S1 or high resolution moving image signal S2) in terms of data format and the number of pixels and the color gamut of the image in order to transform the picked up image 1, for instance, image data in a format corresponding to the data format of the first image 2 to be recorded, image data in a format corresponding to the data format of the second image 3 to be recorded and image data in n a format corresponding to the data format of the third image 4 to be recorded.

Thereafter, the still image signal processing section 32 transforms the image data of the first image 2 to be recorded into image data D1 in a format corresponding to the data format of first divided images 5, the image data of the second image 3 to be recorded into image data D1 in a format corresponding to the data format of second divided images 6 and the image data of the third image 4 to be recorded into image data D1 in a format corresponding to the data format of third divided images 7 in a manner as described above. The image data D1 of the still image used to produce the plurality of divided images are then fed to the recording signal processing section 34.

The moving image signal processing section 33 carries out a transforming operation on the moving image signal (the high resolution moving image signal S2 or the low resolution moving image signal S3) fed from the moving image input section 37 in terms of the frame frequency, the pixel number and the color gamut of the image in order to transform the high resolution moving image signal S2 or the low resolution moving image signal S3 into a signal in a format adapted to be recorded as image data D2 of a low resolution moving image and then transmit it to the recording signal processing section 34.

The recording signal processing section 34 carries out a transforming operation on the moving image signal (high resolution moving image signal S2 or low resolution moving image signal S3) fed from the moving image input section 37 in terms of the frame frequency, the pixel number and the color gamut of the image in order to transform the high resolution moving image signal S2 or the low resolution moving image signal S3 into a signal in a format adapted to be recorded as image data D2 of a low resolution moving image.

The recording signal processing section 34 carries out a predetermined processing operation including shuffling, encoding, error correcting and record channel coding on the image data D1 of the still image fed from the still image signal processing section 32 or the image data D2 of the low resolution moving image fed from the moving image signal processing section 33 and transforms the image data D1 of the still image or the image data D2 of the moving image into image data D3 in a format according to the digital video standards to which the image data recording apparatus 30 conforms. Additionally, the recording signal processing section 34 is supplied with a sound signal, annex information such as data on the date and time and the copyright and information indicating that the image data of the image to be recorded are converted into image data D1 in a format corresponding to the data format of divided images.

The signal recording section 35 records the image data D3 in a format according to the digital video standards to which the image data recording apparatus conforms that are obtained by transfonning the image data D1 of the still image or the image data D2 of the moving image, the sound signal, the annex infonnation and the information indicating that the image data of the image to be recorded are transformed into image data D1 in a format corresponding to the data format of divided images on a recording medium 11 that may be a digital video tape or a digital video disk as it operates in synchronism with the recording signal processing section 34 in terms of clock. At this time, the signal recording section 35 records the image data D3 in a format according to the digital video standards to which the image data recording apparatus conforms that are obtained by transforming the image data D1 of the still image on the recording medium 11 in such a way that the image data of the first divided images 5, the image data of the second divided images 6 and the image data of the third divided images 7 are recorded continuously over the frames of a second.

With an image data recording apparatus 30 according to an embodiment of the invention and having a configuration as described above, the picked up image 1 (high resolution still image signal S1 or the high resolution moving image signal S2) is transformed into image data D1 in a format corresponding to the data format of a plurality of divided images by way of images to be recorded by the still image signal processing section 32. Then, the image data D1 are transformed into image data D3 in a format corresponding to the data format according the digital video standards to which the image data recording apparatus 30 conforms by the recording signal processing section 34. Thereafter, the image data D3 are recorded on a recording medium 11 by allocating a frame to each divided image by the signal recording section 35. Thus, an image data recording apparatus 30 according to the invention can appropriately record a high definition image according to an existing set of digital video standards.

With an image data recording apparatus 30 according to an embodiment of the invention, each image to be recorded is divided into pixel blocks, each containing a plurality of adjacently arranged pixels, and one or more than one pixels are taken out from each of the pixel blocks by the still image signal processing section 32 to produce a plurality of divided images by synthetically recombining the taken out pixels so that the divided images displayed as moving image can be perceived almost as an image to be recorded.

Additionally, with image data recording apparatus 30 according to an embodiment of the invention, the picked up image 1 is transformed into a plurality of images to be recorded with different degrees of resolution and each of the images to be recorded is divided into a plurality of divided images by the still image signal processing section 32. Then, then the image data of the produced divided images are sequentially recorded on a recording medium 11 so that the original image can be reproduced as an image with a desired degree of resolution by sequentially reading out the divided images of the image recorded with the desired degree of resolution.

While a high resolution still image signal S1, a high resolution moving image signal S2 or a low resolution moving image signal S3 are externally input and the entered high resolution still image signal S1 or the high resolution moving image signal S2 is recorded on a recording medium 11 as image data D1 of a still image formed by a plurality of divided images in the above description, an image data recording apparatus according to the invention is by no means limited thereto. For example, it may additionally comprise an image pickup section and a high resolution still image signal S1 or a high resolution moving image signal S2 produced by the image pickup section may be recorded on a recording medium 11 as image data D1 of a still image formed from a plurality of divided images.

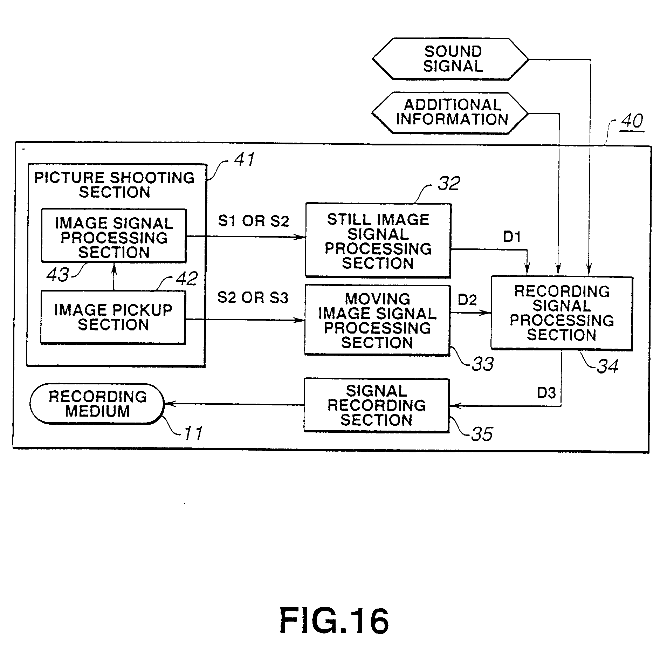

FIG. 16 is a schematic block diagram of another embodiment of image data recording apparatus according to the invention and comprising an image pickup section. The embodiment of image data recording apparatus 40 shown in FIG. 16 is identical with the above described image data recording apparatus 30 except that the image input section 31 is replaced by an image pickup section 41 so that the components same as or similar to those of the image data recording apparatus 30 are denoted respectively by the same reference symbols and will not be described any further.

In this image data recording apparatus 40, the image pickup section 41 includes an imaging section 42 and a picked up image signal processing section 43. Thus, the image data recording apparatus 40 is adapted to shoot an object and output a high resolution still image signal S1 or a high resolution moving image signal S2 as image signal.

The imaging section 42 has an optical system and an image pickup device such as CCD and supplies the picked up image signal processing section 43 with the signal obtained from the picked up image. The picked up image signal processing section 43 transforms the signal fed from the imaging section 42 into a high resolution still image signal S1, a high resolution moving image signal S2 or a low resolution moving image signal S3. Then, the picked up image processing section transmits the high resolution still image signal S1, the high resolution moving image signal S2 or the low resolution moving image signal S3 to the moving image signal processing section 33.

As in the case of the image data recording apparatus 30, the high resolution still image signal S1 or the high resolution moving image signal S2 (picked up image 1) fed from the picked up image signal processing section 43 is then transformed by the still image signal processing section 42 into first divided image images 5 by way of a first image to be recorded 2, second divided images 6 by way of a second image to be recorded 3 and third divided images 7 by way of a third image to be recorded 4.

Then, the recording signal processing section 34 carries out a predetennined processing operation on the image data D1 of the still image formed by a plurality of divided images and transforms them into image data D3 in a format according to an existing set of digital video standards to which the image data recording apparatus 40 conforms. Then, the image data D3 are recorded on a recording medium 11 by the recording section 35 in such a way that the divided images are recorded continuously over frames of a second.

Thus, an image data recording apparatus 40 according to embodiments of the invention can appropriately record a high definition image according to an existing set of digital video standards as in the case of an image data recording apparatus 30 as described above.

As in the case of an image data recording apparatus 30 as described above, with an image data recording apparatus 40 according to the invention, each image to be recorded is divided into pixel blocks, each containing a plurality of adjacently arranged pixels, and one or more than one pixels are taken out from each of the pixel blocks by the still image signal processing section 32 to produce a plurality of divided images by synthetically recombining the taken out pixels so that the divided images displayed as moving image can be perceived almost as an image to be recorded.

Additionally as in the case of an image data recording apparatus 30 as described above, with image data recording apparatus 40 according to the invention, the picked up image 1 is transformed into a plurality of images to be recorded with different degrees of resolution and each of the images to be recorded is divided into a plurality of divided images by the still image signal processing section 32. Then, then the image data of the produced divided images are sequentially recorded on a recording medium 11 so that the original image can be reproduced as an image with a desired degree of resolution by sequentially reading out the divided images of the image recorded with the desired degree of resolution.

### 4. Image Data Reproducing Apparatus

An image data reproducing apparatus according to an embodiment of the invention is adapted to obtain an reproduced image from an recording medium 11 carrying the first divided images 5, the second divided images 6 and the third divided images 7 of a picked-up image obtained by transforming the picked up image 1 and recorded thereon in a manner as described above .

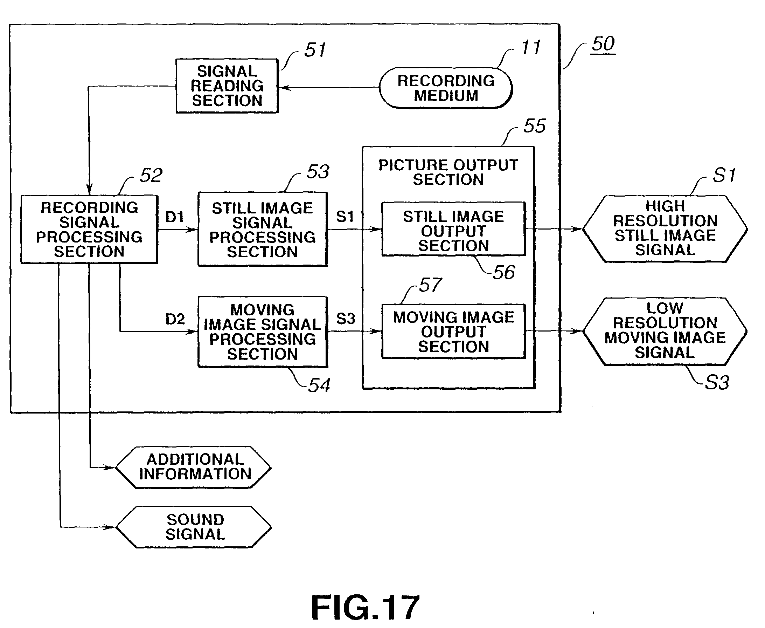

FIG. 17 is a schematic block diagram of an embodiment of image data reproducing apparatus according to the invention. Referring to FIG. 7, the image data reproducing apparatus 50 reproduces a high resolution still image signal S1 or a low resolution moving image signal S3 out of the image data D3 recorded on a recording medium 11 that may be a digital video tape of a digital video disk.

The image data reproducing apparatus 50 comprises a signal reading section 51 for reading the image data D3 from the recording medium 11, a recorded signal processing section 52 for carrying out a predetermined processing operation on the image data D3 read out by the signal reading section 51 to produce image data D1 of a still image or image data D2 of a low resolution moving image, a sound signal and annex information, a still image signal processing section 53 for transforming the image data D1 of the still image fed from the recorded signal processing section 52 into a high resolution still image signal S1, a moving image signal processing section 54 for transforming the image data D2 of the moving image fed from the recorded signal processing section 52 into a low resolution moving image signal S3 and an image output section 55 for outputting the high resolution still image signal Sl fed from the still image signal processing section 53 or the low resolution moving image signal S3 fed from the moving image signal processing section 54.

The image signal reading section 51 reads out the image data D3 from the recording medium 11 that may be a digital video tape or a digital video disk as it operates in synchronism with the recording signal processing section 34 in terms of clock. At this time, the signal reading section 51 selectively reads the image data of the divided images obtained by dividing an image to be recorded with a desired degree of resolution out of the image data D3 recorded on the recording medium 11.

Along with the image data D3, the image signal reading section 51 also reads out a sound signal, annex information such as data on the date and time and the copyright and information indicating that the image data of the image to be recorded are converted into image data D1 in a format corresponding to the data format of divided images.

The recorded signal processing section 52 carries out a predetermined processing operation including shuffling, encoding, error correcting and record channel coding on the image data D3 selectively read out by the signal reading section 51 to produce image data D1 of the still image or the image data D3 of the low resolution moving image.

The still image signal processing section 53 transforms the image data D1 (of the selectively read out divided images) of the still image produced by the recorded signal processing section 52. More specifically, the still image signal processing section 53 transforms the image data D1 (of a plurality of divided images, each consisting of a plurality of frames) fed from the recorded signal processing section 52 into image data in a format according to the digital video standards to which the image data reproducing apparatus 50 confonns. The still image signal processing section 53 then supplies the image output section 55 with the image data of the image to be reproduced (high resolution still image signal S1).

The moving image signal processing section 54 carries out a transfonning operation on the image data D2 of the low resolution moving image fed from the recorded signal processing section 52 in terms of data format, the frame frequency, the number of pixels and the color gamut of the image in order to transform the image data D2 of the low resolution moving image into a signal adapted to be output from the image output section 55 (low resolution moving image signal S3) and then it transmits the signal to the image output section 55.

The image output section 55 includes a still image output section 56 and a moving image output section 57. The image output section 55 operates to output the high resolution still image signal S1 fed from the still image signal processing section 53 or the low resolution moving image signal S3 fed from the moving image signal processing section 54 to the outside of the apparatus. More specifically in the image output section 55, upon receiving a high resolution still image signal S1 from the still image signal processing section 53, the still image output section 56 outputs the high resolution still image signal S1 to the outside, whereas, upon receiving a low resolution moving image signal S3 from the moving image signal processing section 54, the moving image output section 57 outputs the low resolution moving image signal S3 to the outside.

With an image data reproducing apparatus 50 according to an embodiment of the invention and having a configuration as described above, since a plurality of divided images are synthetically recombined by the still image signal processing section 53 to obtain an image to be reproduced is recorded in the form of a plurality of divided images on an information recording medium 11 and the image is output to the output side by the still image output section 56, a high definition image can be reproduced from an information recording medium on which the image to be reproduced is recorded in a manner conforming to the existing DV Standards provided for recording the image data of images.

Additionally, with an image data reproducing apparatus 50 according to an embodiment of the invention, since an image to be reproduced that are divided into a plurality of divided images with different degrees of resolution and recorded on an information recording medium 11 is synthetically recombined and output out of the plurality of images to be reproduced so that the original image can be reproduced with a desired degree of resolution.

### 5. Image Data Recording/Reproducing Apparatus

Now, an image data recording/reproducing apparatus to which embodiments of the present invention are applied will be described below.

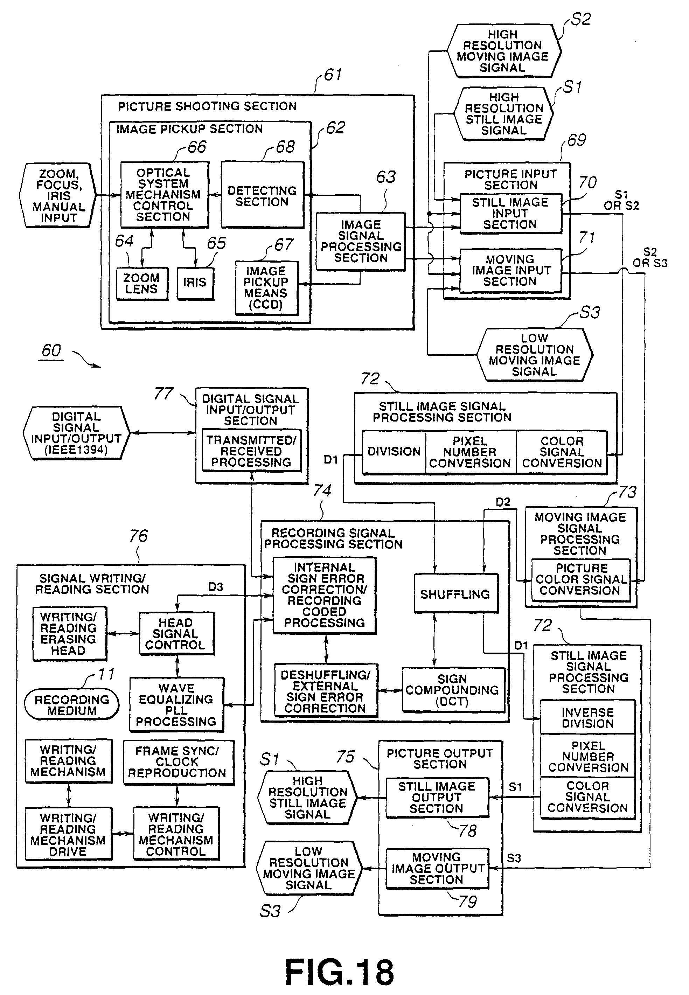

FIG. 18 is a schematic block diagram of an image data recording/reproducing apparatus to which embodiments of the present invention may be applied, showing its configuration in detail. The image data recording/reproducing apparatus 60 is designed to combine the functional features of the image data recording apparatus 30, the image data recording apparatus 40 and the image data reproducing apparatus 50 described above.

More specifically, the image data recording/reproducing apparatus 60 is adapted to record the high resolution still image signal S1 or the high resolution moving image signal S2 obtained by shooting an object by means of the image pickup section on a recording medium 11 as image signal of a still image constituted by a plurality of divided images or record the high resolution still image signal S1 or the high resolution moving image signal S2 entered through the image input section on a recording medium 11 as image signal of a still image constituted by a plurality of divided images and also record a high resolution moving image signal S2 or a low resolution moving image signal S3 obtained by shooting an object by means of the image pickup section on a recording medium 11 as image signal of a low resolution moving image or record the high resolution moving image signal S2 or the low resolution moving image signal S3 entered through the image input section on a recording medium 11 as image signal of a low resolution moving image.

The image data recording/reproducing apparatus 60 additionally has a function of reproducing a high resolution still image signal S1 or a low resolution moving image signal S3 from the image signal recorded on the recording medium 11.

While the image data recording/reproducing apparatus is described in terms of a method of recording/reproducing a low resolution moving image signal conforming to the above described DV Standards, it is by no means limited thereto and can be compatible with any other standards as described above.

In the image data recording/reproducing apparatus 60, the image pickup section 61 includes an imaging section 62 and a picked up image signal processing section 63. Thus, it is adapted to shoot an object and output a high resolution still image signal S1, - a high resolution moving image signal S2 or a low resolution moving image signal S3 as image signal.

The imaging section 62 has an optical system including a zoom lens 64 and an iris 65, an optical system mechanism control section 66, an image pickup means 67 such as CCD and a sensor section 68 for sensing the focal point and the exposure, The imaging section 62 supplies the picked up image signal processing section 63 with the signal obtained by shooting the object with the image pickup means 67.

The picked up image signal processing section 63 transforms the signal fed from the imaging section 62 into a high resolution still image signal S1, a high resolution moving image signal S2 or a low resolution moving image signal S3. Then, the picked up image processing section 63 transmits the high resolution still image signal S1, the high resolution moving image signal S2 or the low resolution moving image signal S3 to the image input section 69.

The image input section 69 includes a still image input section 70 and a moving image input section 71. The image input section 69 has a functional feature of selecting a necessary signal from a plurality of input signals.

The still image input section 70 receives a high resolution still image signal S1 or a high resolution moving image signal S2 as input and supplies the still image signal processing section 72 with an necessary image. In other words, it supplies the still image signal processing section 72 with the input image as picked up image 1. On the other hand, the moving image input section 71 receives a high resolution moving image signal S2 or a low resolution moving image signal S3 as input and supplies the moving image processing section 73 with a necessary image.

For recording image data, the still image signal processing section 72 transforms the picked up image 1 into first divided images 5 by way of first images 2 to be recorded, into second divided images 6 by way of second images 3 to be recorded and into third divided images 7 by way of third images 4. In other words, the still image signal processing section 72 carries out a transforming operation on the picked up image 1 fed from the still image input section 70 (high resolution still image signal S1 or high resolution moving image signal S2) in terms of data format and the number of pixels and the color gamut of the image in order to transform the picked up image 1, for instance, image data in a format corresponding to the data format of the first image 2 to be recorded, image data in a format corresponding to the data format of the second image 3 to be recorded and image data in n a format corresponding to the data format of the third image 4 to be recorded.

Thereafter, the still image signal processing section 72 transforms the image data of the first image 2 to be recorded into image data D1 in a format corresponding to the data format of first divided images 5, the image data of the second image 3 to be recorded into image data D1 in a format corresponding to the data format of second divided images 6 and the image data of the third image 4 to be recorded into image data D1 in a format corresponding to the data format of third divided images 7 in a manner as described above.

For reproducing image data, the still image signal processing section 72 transforms the image data D1 (of the selectively read out divided images) of the still image produced by the recorded signal processing section 74. More specifically, the still image signal processing section 72 transforms the image data D1 (of a plurality of divided images, each consisting of a plurality of frames) fed from the recorded signal processing section 74 into image data in a format according to the digital video standards to which the image data recording/reproducing apparatus 60 conforms. The still image signal processing section 72 then supplies the image output section 75 with the image data of the image to be reproduced (high resolution still image signal S1).

For recording image data, the moving image signal processing section 73 carries out a transforming operation on the moving image signal (the high resolution moving image signal S2 or the low resolution moving image signal S3) fed from the moving image input section 71 in terms of the frame frequency, the pixel number and the color gamut of the image in order to transform the high resolution moving image signal S2 or the low resolution moving image signal S3 into a signal in a format adapted to be recorded as image data D2 of a low resolution moving image and then transmit it to the recording signal processing section 74.

For reproducing image data, the moving image signal processing section 73 carries out a transforming operation on the image data D2 of the low resolution moving image fed from the recorded signal processing section 72 in terms of data format, the frame frequency, the number of pixels and the color gamut of the image in order to transform the image data D2 of the low resolution moving image into a signal adapted to be output from the image output section 75 (low resolution moving image signal S3) and then it transmits the signal to the image output section 75.

For recording image data, the recording signal processing section 74 carries out a predetermined processing operation including shuffling, encoding, error correcting and record channel coding on the image data D1 of the still image fed from the still image signal processing section 72 or the image data D2 of the low resolution moving image fed from the moving image signal processing section 73 and transforms the image data D1 of the still image or the image data D2 of the moving image into image data D3 in a format according to the digital video standards to which the image data recording/reproducing apparatus 60 conforms. Additionally, the recording signal processing section 74 is supplied with a sound signal, annex information such as data on the date and time and the copyright and information indicating that the image data of the image to be recorded are converted into image data D1 in a format corresponding to the data format of divided images.

For reproducing image data, the recorded signal processing section 72 carries out a predetermined processing operation including shuffling, encoding, error correcting and record channel coding on the image data D3 read out by the signal writing/reading section 76 to produce image data D1 of the still image or the image data D3 of the low resolution moving image.

In an image data recording/reproducing apparatus according to embodiments of the invention, a digital signal input/output section 77 may be connected to the recording signal processing section 74 so that a digital signal may be input or output by way of the digital signal input/output section 77.

For recording image data, the signal writing/reading section 76 records the image data D3 in a format according to the DV standards to which the image data recording apparatus conforms that are obtained by transforming the image data D1 of the still image or the image data D2 of the moving image, the sound signal, the annex information and the information indicating that the image data of the image to be recorded are transformed into image data D1 in a format corresponding to the data format of divided images on a recording medium 11 that may be a digital video tape or a digital video disk as it operates in synchronism with the recording signal processing section 74 in terms of clock. At this time, the signal writing/reading section 76 records the image data D3 in a format according to the digital video standards to which the image data recording apparatus conforms that are obtained by transforming the image data D1 of the still image on the recording medium 11 in such a way that the image data of the first divided images 5, the image data of the second divided images 6 and the image data of the third divided images 7 are recorded continuously over the frames of a second.

For reproducing image data, the signal writing/reading section 76 reads out the image data D3 from the recording medium 11 that may be a digital video tape or a digital video disk as it operates in synchronism with the recording signal processing section 74 in terms of clock. At this time, the signal writing/reading section 76 selectively reads the image data of the divided images obtained by dividing an image to be recorded with a desired degree of resolution out of the image data D3 recorded on the recording medium 11.

For reproducing image data, the image signal writing/reading section 76 also reads out a sound signal, annex information such as data on the date and time and the copyright and information indicating that the image data of the image to be recorded are converted into image data D1 in a format corresponding to the data format of divided images along with the image data D3.

The image output section 75 includes a still image output section 78 and a moving image output section 79. The image output section 75 operates to output the high resolution still image signal S1 fed from the still image signal processing section 72 or the low resolution moving image signal S3 fed from the moving image signal processing section 73 to the outside of the apparatus. More specifically in the image output section 75, upon receiving a high resolution still image signal S1 from the still image signal processing section 72, the still image output section 78 outputs the high resolution still image signal S1 to the outside, whereas, upon receiving a low resolution moving image signal S3 from the moving image signal processing section 73, the moving image output section 79 outputs the low resolution moving image signal S3 to the outside.

With an image data recording/reproducing apparatus 60 according to embodiments of the invention and having a configuration as described above, the picked up image 1 (high resolution still image signal S1 or the high resolution moving image signal S2) is transformed into image data D1 in a format corresponding to the data format of a plurality of divided images by way of images to be recorded by the still image signal processing section 72. Then, the image data D1 are transformed into image data D3 in a format corresponding to the data format according the digital video standards to which the signal writing/reading apparatus 30 conforms by the recording signal processing section 74. Thereafter, the image data D3 are recorded on a recording medium 11 by allocating a frame to each divided image by the signal recording section 75. Thus, an image data recording/reproducing apparatus 60 according to embodiments of the invention can appropriately record a high definition image according to an existing set of digital video standards.

With an image data recording/reproducing apparatus 60 according to embodiments of the invention, each image to be recorded is divided into pixel blocks, each containing a plurality of adjacently arranged pixels, and one or more than one pixels are taken out from each of the pixel blocks by the still image signal processing section 72 to produce a plurality of divided images by synthetically recombining the taken out pixels so that the divided images displayed as moving image can be perceived almost as an image to be recorded.

Additionally, with image data recording/reproducing apparatus 60 according to embodiments of the invention, the picked up image 1 is transformed into a plurality of images to be recorded with different degrees of resolution and each of the images to be recorded is divided into a plurality of divided images by the still image signal processing section 72. Then, then the image data of the produced divided images are sequentially recorded on a recording medium 11 by means of the signal writing/reading section 76 so that the original image can be reproduced as an image with a desired degree of resolution by sequentially reading out the divided images of the image recorded with the desired degree of resolution.

With an image data recording/reproducing apparatus 60 according to embodiments of the invention and having a configuration as described above, since a plurality of divided images are synthetically recombined by the still image signal processing section 72 to obtain an image to be reproduced is recorded in the form of a plurality of divided images on an information recording medium 11 and the image is output to the output side by the still image output section 78, a high definition image can be reproduced from an information recording medium on which the image to be reproduced is recorded in a manner conforming to the existing DV Standards provided for recording the image data of images.

Additionally, with an image data recording/reproducing apparatus 60 according to embodiments of the invention, since an image to be reproduced that are divided into a plurality of divided images with different degrees of resolution and recorded on an information recording medium 11 is synthetically recombined and output out of the plurality of images to be reproduced so that the original image can be reproduced with a desired degree of resolution.

An image data recording/reproducing apparatus to which embodiments of the present invention are applied can be realized by using a general purpose computer.

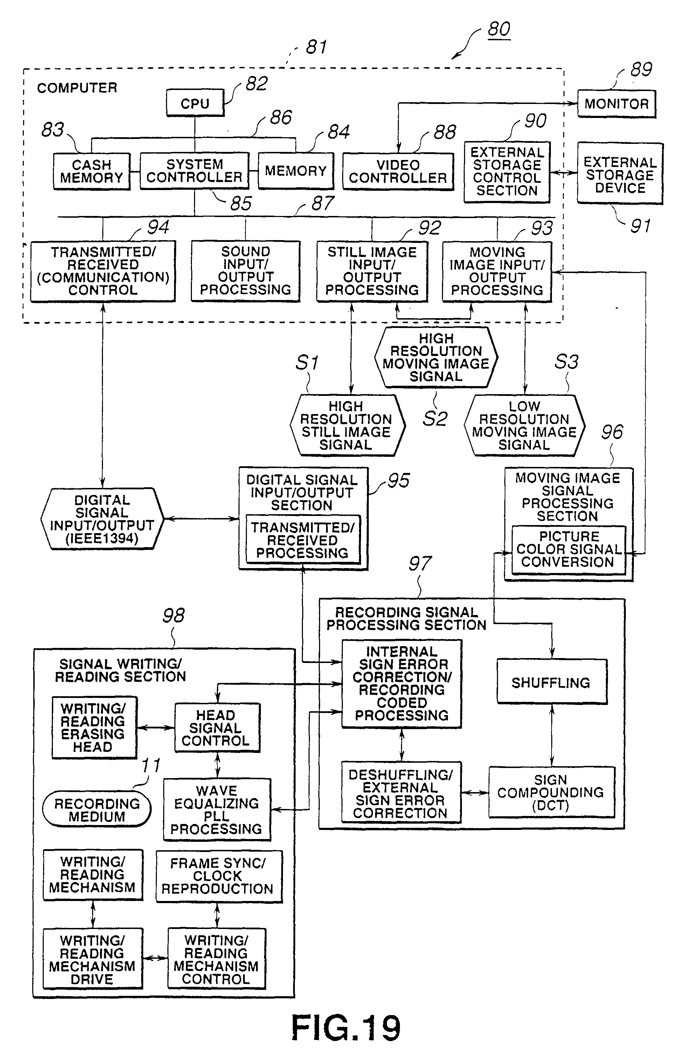

FIG. 19 is a schematic block diagram of another image data recording/reproducing apparatus to which embodiments of the present invention can be applied, showing its configuration in detail. Referring to FIG. 19, the image data recording/reproducing apparatus 80 is designed to combine the functional features of the image data recording apparatus 30, the image data recording apparatus 40 and the image data reproducing apparatus 50 described above.

More specifically, the image data recording/reproducing apparatus 80 is adapted to record the high resolution still image signal S1 or the high resolution moving image signal S2 obtained by shooting an object by means of the image pickup section on a recording medium 11 as image signal of a still image constituted by a plurality of divided images or record the high resolution still image signal S1 or the high resolution moving image signal S2 entered to computer 81 on a recording medium 11 as image signal ofa still image constituted by a plurality of divided images and also record a high resolution moving image signal S2 or a low resolution moving image signal S3 entered to the computer 81 on a recording medium 11 as image signal of a low resolution moving image or record the high resolution moving image signal S2 or the low resolution moving image signal S3 entered through the image input section on a recording medium 11 as image signal of a low resolution moving image.

In the image data recording/reproducing apparatus 80, the functions of the image input section 31 and the still image signal processing section 32 of the above described image data recording apparatus 30 and those of the still image signal processing section 53 and the image output section 55 of the above described image data reproducing apparatus 50 are assigned to the computer 81.

In the image data recording/reproducing apparatus 80, the CPU 82 of the computer 81 controls the entire operation of the apparatus and carries out arithmetic operations and a Pentium (trade name) available from Intel may suitably be used for it. The CPU 82 is adapted to carry out arithmetic operations for various image processing operations including transforming a picked up image, an image to be recorded or an image to be reproduced.

Cache memory 83 operates as high speed memory for storing information of memory 84 to which the CPU 82 frequently accesses. As it directly exchanges information with the CPU 82, the system is allowed to operates at high speed.

System controller 85 regulates the timings of operations of the CPU 82, the cache memory 83, the memory 84 and computer buses including a host bus 86 and a PCI bus 87. For example, TRITON (430FX) (trade name) available from Intel may suitably be used for it.

The memory 84 stores or reproduces information according to the instruction of the CPU 82 or the system controller 85 and may typically be a DRAM (dynamic random access memory). The memory 84 is connected to the CPU 82 and various resources on the PCI bus 87 and adapted to store information by way of the system controller 85. Thus, the memory 84 can store image data.

The host bus 86 is connected directly to the CPU 82 and operates as means for transmitting information. It is adapted to exchange information with the cache memory 83 and the system controller 85 at high speed.

The PCI bus 87 is separated from the host bus and also operates as means for transmitting information. It is connected to the system controller 85. The CPU 82 can access various resources connected to the PCI bus 87 by way of the system controller 85.

Video controller 88 is connected between the PCI bus 87 and a monitor 89 and operates to write various information including images, graphics and characters on the video memory in the video controller 88 and output the stored information to the monitor 89 according to the instruction of the CPU 82. The video memory in the video controller 88 can also store image data. Additionally, it can exchange information including the characteristics of various devices stored in the monitor 89 with the latter by means of part of a signal line typically conforming to the VESA DDC (Display Data Channel) Standards.

The monitor 89 is an image display unit that may comprise a CRT, PDP, a liquid crystal display or a projector and is adapted to display information including images, graphics and characters such as images of high resolution still image signals and low resolution moving image signals.

External memory control section 90 is connected between the PCI bus 87 and an external memory unit 91 and controls the operation of writing information to and reading information from a predetermined area of the external memory unit 91. The connection is typically based on SCSI or IEEE1394.

The external memory unit 91 typically comprises a unit of information recording medium such as a magnetic disk unit containing a hard disk or a floppy disk, an optical disk unit containing a CD-ROM, a magneto-optical disk unit containing an MD-DATA, a semiconductor memory unit containing a flash memory or a magnetic tape unit containing a DAT and a drive unit. It is adapted to store and reproduce information such as images, graphics, characters and programs including high resolution still image signals S1 and low resolution moving image signals S3.

Still image input/output processing section 92 is connected to the PCI bus 87 and adapted to output of input a high resolution still image signal S1 or a high resolution moving image signal S2 according to the instruction of the CPU 82. The still image input/output processing section 92 receives image data obtained by means of a digital still camera and stores them in the memory 84 or the external memory unit 91 typically by way of parallel signals compatible with RS-232C or Centronics and interfaces such as SCSI. The still image input/output processing section 92 also outputs image data stored in the memory 84 or the external memory unit 91 to some other computer or a printer.

Moving image input/output processing section 93 is connected to the PCI bus 87 and adapted to output of input a high resolution moving image signal S2 or a low resolution moving image signal S3 according to the instruction of the CPU 82. The moving image input/output processing section 93 is adapted to perform input/output processing operations such as the operation of selecting and sorting composite video signals compatible with the NTSC system, the PAL system and/or the SECAM system, S video signals containing luminance signals and chromaticity signals separated from each other and component video signals and the operation of regulating the video signal level. The moving image input/output processing section 93 receives and digitizes video signals and stores them in the memory 84 or the external memory unit 91. It also outputs video signals stored in the memory 84 or the external memory unit 91 to some other computer or a printer.

Transmission/reception control section 94 is connected to the signal input/output section 95 external to the PCI bus 87 and the computer 81 and adapted to control the operation of transmitting and receiving information according to an information access request from the inside of the image data recording/reproducing apparatus 80 or an information access request from the partner of communication. The connection is typically based on SCSI or IEEE1394.

For recording image data, the moving image signal processing section 96 carries out a transforming operation on the moving image signal (the high resolution moving image signal S2 or the low resolution moving image signal S3) fed from the moving image input/output processing section 93 of the computer 81 in terms of the frame frequency, the pixel number and the color gamut of the image in order to transform the high resolution moving image signal S2 or the low resolution moving image signal S3 into a signal in a format adapted to be recorded as image data D2 of a low resolution moving image and then transmit it to the recording signal processing section 97.

For reproducing image data, the moving image signal processing section 96 carries out a transforming operation on the image data D2 of the low resolution moving image fed from the recorded signal processing section 97 in terms of data format, the frame frequency, the number of pixels and the color gamut of the image and then transmits the signal to the moving image input/output section 93.

For recording image data, the recording signal processing section 97 carries out a predetermined processing operation including shuffling, encoding, error correcting and record channel coding on the image data D2 of the low resolution moving image fed from the moving image signal processing section 96 and transforms the image data D1 of the still image or the image data D2 of the moving image into image data D3 in a format according to the digital video standards to which the image data recording/reproducing apparatus 80 conforms. Additionally, the recording signal processing section 97 is supplied with a sound signal, annex information such as data on the date and time and the copyright

For reproducing image data, the recording signal processing section 97 carries out a predetermined processing operation including shuffling, encoding, error correcting and record channel coding on the image data D3 read out by the signal writing/reading section 98 to produce image data D1 of the still image or the image data D3 of the low resolution moving image.

For recording image data, the signal writing/reading section 98 records the image data D3 in a format according to the DV standards to which the image data recording apparatus conforms that are obtained by transforming the image data D2 of the moving image, the sound signal, the annex information and the information indicating that the image data of the image to be recorded are transformed into image data D1 in a format corresponding to the data format of divided images on a recording medium 11 that may be a digital video tape or a digital video disk as it operates in synchronism with the recording signal processing section 97 in terms of clock.

For reproducing image data, the signal writing/reading section 98 reads out the image data D3 from the recording medium 11 that may be a digital video tape or a digital video disk as it operates in synchronism with the recording signal processing section 97 in terms of clock.

In an image data recording/reproducing apparatus 80 and having a configuration as described above, the processing operation of transforming a picked up image 1 into divided images by way of images to be recorded and recording them on a recording medium 11 and the processing operation of reading divided images from the recording medium 11, synthetically recombining them to reproduce an image to be reproduced and outputting the reproduced image are typically carried out by causing the computer 81 to read the program recorded on the recording medium for the processing operations and driving the CPU 82 to operate according to the program.

The program for causing the computer 81 to carry out the above processing operations is written into the external memory unit 91. The program written into the external memory unit 91 is then read out from it by the external memory control section 90 and fed to the system controller 85 by way of the CPI bus 87. The system controller 85 drives the CPU 82 to operate according to the program fed to it in order to carry out the processing operation of transforming a picked up image 1 into divided images by way of images to be recorded and recording them on a recording medium 11 and the processing operation of reading divided images from the recording medium 11, synthetically recombining them to reproduce an image to be reproduced and outputting the reproduced image.

In the image data recording/reproducing apparatus 80, the functions of the image input section 31 and the still image signal processing section 32 of the above described image data recording apparatus 30 and those of the still image signal processing section 53 and the image output section 55 of the above described image data reproducing apparatus 50 are assigned to the computer 81. Thus, the image data recording/reproducing apparatus 80 can appropriately record high definition images while conforming to the existing DV Standards and reproduce images to be reproduced recorded on a recording medium 11 confonning to the existing DV Standards as high definition images as in the case of the above described image data recording/reproducing apparatus 60.

Additionally, since major functions are assigned to the computer 81, the image data recording/reproducing apparatus 80 can be made to have a simplified configuration.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An image data recording method comprising:
a first processing step of converting an original image into a plurality of images to be recorded with different degrees of resolution;
a second processing step of dividing at least part of said plurality of images to be recorded by respective divisors, said divisors being different from each other, and generating a plurality of divided images with a same number of pixels for each of said part of the images to be recorded; and
a third processing step of continuously recording the image data of said plurality of images to be recorded on an information recording medium on a frame by frame basis, each frame corresponding to a divided image.

2. An image data recording method according to claim 1, said second processing step includes sub-steps of dividing each of said plurality of images to be recorded into a plurality of pixel blocks, each pixel block containing a plurality of adjacently located pixels, taking out more than one pixels from each of the pixel blocks and synthetically recombining the obtained pixels to produce said divided images.

3. An image data recording method according to claim 1, the image data of said plurality of images to be recorded are recorded continuously on the basis of a number of frames per second that allows an original image to be recorded in several seconds in said third processing step.

4. An image data recording method according to claim 3, wherein the image data of said plurality of images to be recorded obtained by transforming said original image are recorded from the 0-th frame of a second of the time codes.

5. An image data recording method according to claim 1, each of said plurality of images to be recorded is divided by a divisor equal to 2²ⁿ (n being an integer equal to or greater than 1) in said second step.

6. An image data recording method according to claim 1, wherein each of the divided images of each of said plurality of images to be recorded is recorded in multiple in a plurality of frames in said second processing step.

7. An image data recording method according to claim 1, wherein information indicating that said image data of said plurality of images to be recorded are recorded on said information recording medium for each of said divided images is recorded with said image data of said plurality of images to be recorded in said third processing step.

8. An image data recording method according to claim 2, if a pixel arbitrarily selected on a pixel block is a first pixel and the frame for recording the divided image containing the first pixel is a first frame, said image data of said images to be recorded are recorded on said information recording medium in such a way that the divided image recorded in a frame adjacent to said first frame contains a pixel located adjacent to said first pixel in said third processing step.

9. An image data recording apparatus comprising:
an image processing section for converting an original image into a plurality of images to be recorded with different degrees of resolution, dividing at least part of said plurality of images to be recorded by respective divisors, said divisors being different from each other, and generating a plurality of divided images with a same number of pixels for each of said part of the images to be recorded; and
a recording section for continuously recording the image data of said plurality of images to be recorded on an information recording medium on a frame by frame basis, each frame corresponding to a divided image.

10. An image data recording apparatus according to claim 9 wherein said image processing section divides each of said plurality of images to be recorded into a plurality of pixel blocks, each pixel block containing a plurality of adjacently located pixels, takes out more than one pixels from each of the pixel blocks and synthetically recombines the obtained pixels to produce said divided images.

11. An image data recording apparatus according to claim 9, wherein said recording section records continuously said plurality of images to be recorded on the basis of a number of frames per second that allows an original image to be recorded in several seconds.

12. An image data recording apparatus according to claim 11, wherein said recording section records the image data of said plurality of images to be recorded obtained by transforming said original image from the 0-th frame of a second of the time codes.

13. An image data recording apparatus according to claim 9, wherein said image processing section divides each of said at least part of said plurality of images to be recorded by a divisor equal to 2²ⁿ (n being an integer equal to or greater than 1).

14. An image data recording apparatus according to claim 9, wherein said recording section records each of the divided images of each of said at least part of said plurality of images to be recorded in multiple in a plurality of frames.

15. An image data recording apparatus according to claim 9, wherein said recording section records information indicating that said image data of said plurality of images to be recorded are recorded on said information recording medium for each of said divided images with said image data of said plurality of images to be recorded.

16. An image data recording apparatus according to claim 10, wherein, if a pixel arbitrarily selected on a pixel block is a first pixel and the frame for recording the divided image containing the first pixel is a first frame, the recording section records said image data of said images to be recorded on said information recording medium in such a way that the divided image recorded in a frame adjacent to said first frame contains a pixel located adjacent to said first pixel.

17. An image data reproducing method adapted to reproduce image data from an information recording medium carrying image data recorded thereon by converting an original image into a plurality of images to be reproduced with different degrees of resolution, dividing at least part of said plurality of images to be reproduced by respective divisors, said divisors being different from each other, generating a plurality of divided images with a same number of pixels for each of said part of the images to be reproduced and continuously recording the image data of said plurality of images to be reproduced on said information recording medium on a frame by frame basis, each frame corresponding to a divided image, said method comprising:
a first processing step of selectively reading a plurality of divided images of an image to be reproduced with a desired degree of resolution; and
a second processing step of synthetically recombining said plurality of divided images read out in said first processing step to output the image to be reproduced with said desired degree of resolution.

18. An image data reproducing method according to claim 17, wherein said second processing step includes sub-steps of taking out one or more than one pixels from each of the plurality of divided images read out in the first processing step, forming a plurality of pixel blocks out of a plurality of pixels and synthetically recombining the plurality of pixel blocks to produce an image to be reproduced with a desired degree of resolution.

19. An image data reproducing method according to claim 17, wherein each of the plurality of divided images of each of said plurality of images to be recorded is recorded in a plurality of frames in multiple; and
at least one of said multiple images of each of said plurality of divided images of said plurality of images to be recorded is selected and said image to be reproduced is obtained by synthetically recombining said divided images that are selected in said second step.

20. An image data reproducing method according to claim 17, wherein each of the plurality of divided images of each of said plurality of images to be recorded is recorded in a plurality of frames in multiple; and
said multiple images of each of said plurality of divided images of said plurality of images to be recorded are averaged and said image to be reproduced is obtained by synthetically recombining the images obtained by said averaging process in said second step.

21. An image data reproducing method according to claim 17, wherein the information indicating that said image to be reproduced is produced by synthetically recombining a plurality of pixel blocks with a desired degree of resolution is read from said information recording medium with said plurality of divided images in said first processing step.

22. An image data reproducing method according to claim 17, wherein if one of said plurality of divided images recorded on an arbitrarily selected frame is a first frame and the divided image recorded on the frame adjacent to said first divided image is a second divided image, said image to be reproduced is obtained by synthetically recombining divided images in such a way that the pixels contained in said first divided image and the pixels contained in said second divided image are located adjacent in said pixel blocks in said second step.

23. An image data reproducing apparatus adapted to reproduce image data from an information recording medium carrying image data recorded thereon by converting an original image into a plurality of images to be reproduced with different degrees of resolution, dividing at least part of said plurality of images to be reproduced by respective divisors, said divisors being different from each other, generating a plurality of divided images with a same number of pixels for each of said part of the images to be reproduced and continuously recording the image data of said plurality of images to be reproduced on said information recording medium on a frame by frame basis, each frame corresponding to a divided image, said apparatus comprising:
a reading section for selectively reading a plurality of divided images of an image to be reproduced with a desired degree of resolution; and
an image processing section for synthetically recombining said plurality of divided images read out by said reading section to output the image to be reproduced with said desired degree of resolution.

24. An image data reproducing apparatus according to claim 23, wherein said image processing section takes out one or more than one pixels from each of the plurality of divided images read out by said reading section, forms a plurality of pixel blocks out of a plurality of pixels and synthetically recombines the plurality of pixel blocks to produce an image to be reproduced with a desired degree of resolution.

25. An image data reproducing apparatus according to claim 23, wherein each of the plurality of divided images of each of said plurality of images to be recorded is recorded in a plurality of frames in multiple; and
said image processing section selects one of said multiple images of each of said plurality of divided images of said plurality of images to be recorded and obtains said image to be reproduced by synthetically recombining said divided images that are selected.

26. An image data reproducing apparatus according to claim 23, wherein each of the plurality of divided images of each of said plurality of images to be recorded is recorded in a plurality of frames in multiple; and
said image processing section averages said multiple images of each of said plurality of divided images of said plurality of images to be recorded and obtains said image to be reproduced is by synthetically recombining the images obtained by the averaging process.

27. An image data reproducing apparatus according to claim 23, said reading section reads the information indicating that said image to be reproduced is produced by synthetically recombining a plurality of pixel blocks with a desired degree of resolution from said information recording medium with said plurality of divided images.

28. An image data reproducing method according to claim 23, wherein if one of said plurality of divided images recorded on an arbitrarily selected frame is a first frame and the divided image recorded on the frame adjacent to said first divided image is a second divided image, said image processing section obtains said image to be reproduced by synthetically recombining divided images in such a way that the pixels contained in said first divided image and the pixels contained in said second divided image are located adjacent in said pixel blocks.

29. An information recording medium adapted to carry thereon the image data of a plurality of images to be recorded as recorded on a frame by frame basis, each frame corresponding to a divided image, by converting an original image into the plurality of images to be recorded with different degrees of resolution and dividing said plurality of images to be recorded and producing a plurality of divided images with different degrees of resolution.

30. An information recording medium according to claim 29, wherein said divided images recorded on the information recording medium are obtained by dividing each of said plurality of images to be recorded into a plurality of pixel blocks, each containing a plurality of adjacently arranged pixels, taking out one or more than one pixels from each of the pixel blocks and synthetically recombining the taken out pixels.

31. An information recording medium according to claim 29, wherein each of said divided images of said plurality of images to be recorded is recorded in a plurality of frames in multiple.

32. An information recording medium according to claim 29, wherein information indicating that the image data of said plurality of images to be recorded are recorded in said divided images is recorded with said image data of said plurality of images to be recorded.

33. An information recording medium according to claim 30, wherein if a pixel arbitrarily selected on a pixel block is a first pixel and the frame for recording the divided image containing the first pixel is a first frame, said image data of said images to be recorded are recorded on said information recording medium in such a way that the divided image recorded in a frame adjacent to said first frame contains a pixel located adjacent to said first pixel.

34. A computer-readable recording medium carrying a program recorded thereon and adapted to make a computer execute:
a first processing step of converting an original image into a plurality of images to be recorded with different degrees of resolution;
a second processing step of dividing at least part of said plurality of images to be recorded by respective divisors, said divisors being different from each other, and generating a plurality of divided images with a same number of pixels for each of said part of the images to be recorded; and
a third processing step of continuously recording the image data of said plurality of images to be recorded on an information recording medium on a frame by frame basis, each frame corresponding to a divided image.

35. A computer-readable recording medium carrying a program recorded thereon and adapted to reproduce image data from an information recording medium carrying image data recorded thereon by converting an original image into a plurality of images to be reproduced with different degrees of resolution, dividing at least part of said plurality of images to be reproduced by respective divisors, said divisors being different from each other, producing a plurality of divided images with a same number of pixels for each of said part of the images to be reproduced and continuously recording the image data of said plurality of images to be reproduced on said information recording medium on a frame by frame basis, each frame corresponding to a divided image, said reproducing process comprising:
a first processing step of selectively reading a plurality of divided images of an image to be reproduced with a desired degree of resolution; and
a second processing step of synthetically recombining said plurality of divided images read out in said first processing step to output the image to be reproduced with said desired degree of resolution.
